(19) Europäisches Patentamt
European Patent Office
Office européen des brevets

(11) **EP 4 572 162 A1**

(12) **EUROPEAN PATENT APPLICATION**
published in accordance with Art. 153(4) EPC

(43) Date of publication:
**18.06.2025 Bulletin 2025/25**

(21) Application number: **23851608.2**

(22) Date of filing: **28.07.2023**

(51) International Patent Classification (IPC):
***H04B 7/024*** (2017.01)

(52) Cooperative Patent Classification (CPC):
**H04B 7/024; H04B 7/06**

(86) International application number:
**PCT/CN2023/109796**

(87) International publication number:
**WO 2024/032387 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  CN 202210969422**

(71) Applicant: **Datang Mobile Communications
Equipment Co., Ltd.
Beijing 100085 (CN)**

(72) Inventors:
• **LU, Yiwen
  Beijing 100085 (CN)**
• **GAO, Qiubin
  Beijing 100085 (CN)**

(74) Representative: **Studio Torta S.p.A.
Via Viotti, 9
10121 Torino (IT)**

(54) **CODEBOOK PARAMETER TRANSMISSION METHOD AND APPARATUS, AND STORAGE MEDIUM**

(57)    Provided in the embodiments of the present disclosure are a codebook parameter transmission method and apparatus, and a storage medium. The method comprises: a terminal determining initial codebook parameter configuration information; the terminal determining, on the basis of the initial codebook parameter configuration information, codebook parameters in a multi-point coherent joint transmission mode; and the terminal reporting the codebook parameters in the multi-point coherent joint transmission mode.

```
┌─────────────────────────────────────────────┐
│  Determining initial codebook parameter      │⟋ 101
│        configuration information              │
└─────────────────────────────────────────────┘
                      │
                      ▼
┌─────────────────────────────────────────────┐
│  Determining a codebook parameter in a multi- │
│  point coherent joint transmission way based  │ 102
│   on the initial codebook parameter           │
│        configuration information              │
└─────────────────────────────────────────────┘
                      │
                      ▼
┌─────────────────────────────────────────────┐
│  Reporting the codebook parameter in the multi-│ 103
│   point coherent joint transmission way       │
└─────────────────────────────────────────────┘
```

FIG. 1

**Description**

CROSS-REFERENCES TO RELATED APPLICATIONS

The present application claims priority to Chinese patent application No. 202210969422.4 filed on August 12, 2022, entitled "Codebook Parameter Transmission Method and Apparatus, and Storage Medium", which is hereby incorporated by reference in its entirety.

FIELD

The present application relates to the field of communications, and in particular, to methods and apparatuses for codebook parameter transmission and a storage medium.

BACKGROUND

A new radio (NR) system supports a variety of multi transmitting receiving point (MTRP) coordinated multi-point transmission schemes. The coordinated multi-point transmission schemes can be divided into coherent joint transmission (CJT) schemes and non-coherent joint transmission (NCJT) schemes.
A traditional type II codebook design and precoder matrix indicator (PMI) reporting are only applicable to single-point transmission ways or NCJT ways, and are not applicable to multi-point coherent joint transmission ways, which leads to problems such as poor system reliability.

BRIEF SUMMARY

Embodiments of the present application provide methods and apparatuses for codebook parameter transmission, and a storage medium to solve a problem of poor system reliability in the related art.
An embodiment of the present application provides a method for codebook parameter transmission, performed by a terminal, including:

determining initial codebook parameter configuration information;

determining a codebook parameter in a multi-point coherent joint transmission way based on the initial codebook parameter configuration information; and

reporting the codebook parameter in the multi-point coherent joint transmission way.

In some embodiments, the initial codebook parameter configuration information is predefined or configured by a network device.
In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, where the first index is used to indicate the multiple spatial domain beam quantities.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X; or

determining each spatial domain beam quantity in the multiple spatial domain beam quantities, where each spatial domain beam quantity is X/I, and I is a quantity of the multiple spatial domain beam quantities; or

determining an i-th spatial domain beam quantity, where the i-th spatial domain beam quantity is $L_i$, $\sum_{i=1}^{I} L_i = X$, and I is a quantity of the multiple spatial domain beam quantities.

In some embodiments, determining the i-th spatial domain beam quantity includes:
determining the i-th spatial domain beam quantity based on i-th channel estimation information.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, where the second index is used to indicate the multiple frequency domain basis vector quantities.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is Y*N3/R, N3 is a subband size of a current precoder matrix indicator (PMI), and R is a subband factor; or

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities; or

determining an i-th frequency domain basis vector quantity, where the i-th frequency domain basis vector quantity is $M_i$, $\sum_{i=1}^{I} M_i = Y$, and I is a quantity of the multiple frequency domain basis vector quantities.

In some embodiments, reporting the codebook parameter in the multi-point coherent joint transmission way includes:

reporting one frequency domain basis vector; or

reporting multiple frequency domain basis vectors.

In some embodiments, in case that the initial codebook parameter configuration information is an indication of a non-zero coefficient quantity, determining the codebook parameter in the multi-point coherent joint transmission way based on the initial codebook parameter configuration information includes:
determining multiple non-zero coefficient quantities in the multi-point coherent joint transmission way based on the indication of the non-zero coefficient quantity.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

In some embodiments, the method further includes:
performing differential quantization on the non-zero coefficients.

An embodiment of the present application further provides a method for codebook parameter transmission, performed by a network device, including:

receiving a codebook parameter reported from a terminal; and
parsing the codebook parameter based on initial codebook parameter configuration information.

In some embodiments, the initial codebook parameter configuration information is predefined or configured by the network device.

In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

An embodiment of the present application further provides a terminal, including a memory, a transceiver and a processor,
where the memory is used to store a computer program, the transceiver is used to receive and transmit data under control of the processor, and the processor is used to read the computer program in the memory and perform the following operations:

determining initial codebook parameter configuration information;

determining a codebook parameter in a multi-point coherent joint transmission way based on the initial codebook parameter configuration information; and

reporting the codebook parameter in the multi-point coherent joint transmission way.

In some embodiments, the initial codebook parameter configuration information is predefined or configured by a network device.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, where the first index is used to indicate the multiple spatial domain beam quantities.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X; or

determining each spatial domain beam quantity in the multiple spatial domain beam quantities, where each spatial domain beam quantity is X/I, and I is a quantity of the multiple spatial domain beam quantities; or

determining an i-th spatial domain beam quantity, where the i-th spatial domain beam quantity is $L_i$, $\sum_{i=1}^{I} L_i = X$, and I is a quantity of the multiple spatial domain beam quantities.

In some embodiments, determining the i-th spatial domain beam quantity includes:
determining the i-th spatial domain beam quantity based on i-th channel estimation information.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, where the second index is used to indicate the multiple frequency domain basis vector quantities.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is Y*N3/R, N3 is a subband size of a current precoder matrix indicator (PMI), and R is a subband factor; or

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities; or

determining an i-th frequency domain basis vector quantity, where the i-th frequency domain basis vector quantity is $M_i$, $\sum_{i=1}^{I} M_i = Y$, and I is a quantity of the multiple frequency domain basis vector quantities.

In some embodiments, reporting the codebook parameter in the multi-point coherent joint transmission way includes:

reporting one frequency domain basis vector; or

reporting multiple frequency domain basis vectors.

In some embodiments, in case that the initial codebook parameter configuration information is an indication of a non-zero coefficient quantity, determining the codebook parameter in the multi-point coherent joint transmission way based on the initial codebook parameter configuration information includes:
determining multiple non-zero coefficient quantities in the multi-point coherent joint transmission way based on the indication of the non-zero coefficient quantity.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

In some embodiments, the processor is further used to read the computer program in the memory and perform the following operation:
performing differential quantization on the non-zero coefficients.

An embodiment of the present application further provides a network device, including a memory, a transceiver and a processor,
where the memory is used to store a computer program, the transceiver is used to receive and transmit data under control of the processor, and the processor is used to read the computer program in the memory and perform the following operations:

receiving a codebook parameter reported from a terminal; and

parsing the codebook parameter based on initial codebook parameter configuration information.

In some embodiments, the initial codebook parameter configuration information is predefined or configured by the network device.
In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

An embodiment of the present application further provides an apparatus for codebook parameter transmission, including:

a first determining module, used for determining initial codebook parameter configuration information;

a second determining module, used for determining a codebook parameter in a multi-point coherent joint transmission way based on the initial codebook parameter configuration information; and

a first transmitting module, used for reporting the codebook parameter in the multi-point coherent joint transmission way.

In some embodiments, the initial codebook parameter configuration information is predefined or configured by a network device.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, where the first index is used to indicate the multiple spatial domain beam quantities.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X; or

determining each spatial domain beam quantity in the multiple spatial domain beam quantities, where each spatial domain beam quantity is X/I, and I is a quantity of the multiple spatial domain beam quantities; or

determining an i-th spatial domain beam quantity, where the i-th spatial domain beam quantity is $L_i$, $\sum_{i=1}^{I} L_i = X$, and I is a quantity of the multiple spatial domain beam quantities.

In some embodiments, determining the i-th spatial domain beam quantity includes:
determining the i-th spatial domain beam quantity based on i-th channel estimation information.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, where the second index is used to indicate the multiple frequency domain basis vector quantities.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is Y*N3/R, N3 is a subband size of a current precoder matrix indicator (PMI), and R is a subband factor; or

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities; or

determining an i-th frequency domain basis vector quantity, where the i-th frequency domain basis vector quantity is $M_i$, $\sum_{i=1}^{I} M_i = Y$, and I is a quantity of the multiple frequency domain basis vector quantities.

In some embodiments, reporting the codebook parameter in the multi-point coherent joint transmission way includes:

reporting one frequency domain basis vector; or

reporting multiple frequency domain basis vectors.

In some embodiments, in case that the initial codebook parameter configuration information is an indication of a non-zero coefficient quantity, determining the codebook parameter in the multi-point coherent joint transmission way based on the initial codebook parameter configuration information includes:
determining multiple non-zero coefficient quantities in the multi-point coherent joint transmission way based on the indication of the non-zero coefficient quantity.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

In some embodiments, the apparatus further includes a quantizing module,
where the quantizing module is used for performing differential quantization on the non-zero coefficients.

An embodiment of the present application further provides an apparatus for codebook parameter transmission, including:

a second transmitting module, used for receiving a codebook parameter reported from a terminal; and

a parsing module, used for parsing the codebook parameter based on initial codebook parameter configuration information.

In some embodiments, the initial codebook parameter configuration information is predefined or configured by a network device.

In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

An embodiment of the present application further provides a processor-readable storage medium storing a computer program, where the computer program is used for causing a processor to perform the methods for codebook parameter transmission described above.

An embodiment of the present application further provides a computer-readable storage medium storing a computer program, where the computer program is used for causing a computer to perform the methods for codebook parameter transmission described above.

An embodiment of the present application further provides a communication devicereadable storage medium storing a computer program, where the computer program is used for causing a communication device to perform the methods for codebook parameter transmission described above.

An embodiment of the present application further provides a chip product-readable storage medium storing a computer program, where the computer program is used for causing a chip product to perform the methods for codebook parameter transmission described above.

In the methods and apparatus for codebook parameter transmission, and the storage medium provided by the embodiment of the present application, the terminal determines and reports the codebook parameter in the multi-point coherent joint transmission way based on the initial codebook parameter configuration information, thereby reporting a joint codebook parameter under an assumption of a coordinated multi-point transmission scheme, and improving reliability of a system.

BRIEF DESCRIPTION OF THE DRAWINGS

In order to illustrate the solutions in the embodiments of the present application or in the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a first schematic flowchart of a method for codebook parameter transmission according to an embodiment of the present application;

FIG. 2 is a second schematic flowchart of a method for codebook parameter transmission according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for codebook parameter transmission according to an embodiment of the present application; and

FIG. 6 is a second schematic structural diagram of an apparatus for codebook parameter transmission according to an embodiment of the present application.

DETAILED DESCRIPTION

A type II codebook design mainly considers a two-layer codebook design, where a first-layer codebook W1 requires broadband for feeding back spatial domain beam information, and a second-layer codebook W2 requires subband for feeding back frequency domain information, including a linear merging coefficient of a spatial domain beam of each subband. For a first-layer spatial domain beam information, there are a total of $2N_1N_2O_1O_2$ candidate beams in the first-layer codebook, where $N_1N_2$ represents a quantity of channel state information-reference signal (CSI-RS) antenna ports in a vertical or a horizontal direction, and $O_1O_2$ represents a beam oversampling factor in the vertical or the horizontal direction. A terminal supports higher layer signaling configuring feedback of a quantity of spatial domain beams being L=2, 4, that is, feedback of two or four spatial domain beams. The spatial domain beam is fed back on a physical uplink shared channel (PUSCH), and specific parameters include $i_{1,1}$ and $i_{1,2}$. A specific feedback overhead bit width is shown in Table 1. A base station determines spatial domain decoding information based on the feedback overhead in Table 1.

Table 1

| $i_{1,1}$ | $i_{1,2}$ |
|---|---|
| $\lceil \log_2(O_1O_2) \rceil$ | $\left\lceil \log_2 \binom{N_1N_2}{L} \right\rceil$ |

In new radio (NR) Rel-15, a Rel-15 TypeII codebook is defined. It supports rank1 and rank2 codebooks based on linear merging of beams within an orthogonal beam group. Since the Rel-15 codebook requires subband feedback of merging coefficients, and feedback of each subband includes both a subband phase coefficient and a subband amplitude coefficient, in case that a quantity of subbands is large, feedback overhead required for feeding back coefficients of all subbands is huge. In NR Rel-16, a low-overhead Rel-16 eType II codebook is defined, which compresses coefficients of each subband and feeds back the compressed coefficients to the base station. Taking rank=1 as an example, for all subbands, the codebook can be expressed as **W**, where

$$\mathbf{W} = \mathbf{W}_1 \tilde{\mathbf{W}}_2 \mathbf{W}_f^H ;$$

$$\mathbf{W}_1 = \begin{bmatrix} \mathbf{B}_0 & \mathbf{B}_1 & \cdots & \mathbf{B}_{L-1} & & & & 0 \\ & & 0 & & \mathbf{B}_0 & \mathbf{B}_1 & \cdots & \mathbf{B}_{L-1} \end{bmatrix};$$

$$\tilde{\mathbf{W}}_2 = \begin{bmatrix} p_{diff}(0,0)q(0,0) & p_{diff}(0,1)q(0,1) & \cdots & p_{diff}(0,M-1)q(0,M-1) \\ \vdots & & & \\ p_{diff}(L-1,0)q(L-1,0) & p_{diff}(L-1,1)q(L-1,1) & \cdots & p_{diff}(L-1,M-1)q(L-1,M-1) \\ p_{ref}\,p_{diff}(L,0)q(L,0) & p_{ref}\,p_{diff}(L,1)q(L,1) & \cdots & p_{ref}\,p_{diff}(L,M-1)q(L,M-1) \\ \vdots & & & \\ p_{ref}\,p_{diff}(2L-1,0)q(2L-1,0) & p_{ref}\,p_{diff}(2L-1,1)q(2L-1,1) & \cdots & p_{ref}\,p_{diff}(2L-1,M-1)q(2L-1,M-1) \end{bmatrix};$$

and

$$\mathbf{W}_f^H = \begin{bmatrix} c_{0,0} & c_{0,1} & \cdots & c_{0,N_3-1} \\ c_{1,0} & c_{1,1} & \cdots & c_{1,N_3-1} \\ \vdots & & & \vdots \\ c_{M-1,0} & c_{M-1,1} & \cdots & c_{M-1,N_3-1} \end{bmatrix}.$$

Orthogonal merged beams contained in $\mathbf{W}_1$ are the same as the Type II codebook of Rel-15. $\tilde{\mathbf{W}}_2$ represents the compressed coefficient, where $p_{diff}(i, j)$ represents a differential amplitude coefficient, $q(i, j)$ represents a phase coefficient, and $p_{ref}$ represents a reference amplitude coefficient. If a strongest amplitude coefficient in $\tilde{\mathbf{W}}_2$ is located in a first polarization direction (i.e., the first L rows in $\tilde{\mathbf{W}}_2$), the reference amplitude coefficient is located in a second polarization direction, as shown in the above expression. If the strongest amplitude coefficient in $\tilde{\mathbf{W}}_2$ is located in the second polarization direction (i.e., the last L rows in $\tilde{\mathbf{W}}_2$), the reference amplitude coefficient is located in the first polarization direction, which is not repeated here.

The differential amplitude coefficient, the phase coefficient and the reference amplitude coefficient all need to be fed back to the base station. Meanwhile, the terminal needs to report a location of the strongest amplitude coefficient. A corresponding differential amplitude coefficient of the strongest amplitude coefficient is defined as 1, and the phase coefficient of the strongest amplitude coefficient is defined as 0, which does not need to be reported.

In addition, considering further saving feedback overhead, compressed coefficients in each layer of $\tilde{\mathbf{W}}_2$ do not need to be reported in full, and only non-zero coefficients need to be reported. For Rank=1 and Rank=2, the base station configures an upper limit of a quantity of non-zero coefficients reported in each layer to be K0. Since not all compressed coefficients are reported, each layer needs to indicate a location of the corresponding reported non-zero coefficient. $\mathbf{W}_f$ represents a compressed basis vector, which contains M basis vectors, and a length of each vector is $N_3$, where $N_3$ is determined by a quantity of channel quality indicator (CQI) subbands configured by a system.

In addition, the reference amplitude coefficient is quantized to four bits, whose value is

$$\left\{ 1, \left(\frac{1}{2}\right)^{\frac{1}{4}}, \left(\frac{1}{4}\right)^{\frac{1}{4}}, \left(\frac{1}{8}\right)^{\frac{1}{4}}, \ldots, \left(\frac{1}{2^{14}}\right)^{\frac{1}{4}}, 0 \right\}.$$

A traditional NR system supports a variety of multi transmitting receiving point (MTRP) coordinated multi-point transmission schemes, which can be divided into coherent joint transmission (CJT) schemes and non-coherent joint transmission (NCJT) schemes. For a physical downlink shared channel (PDSCH), Rel-16 standardized an NCJT scheme SDM1a, Rel-17 standardized a coordinated multi-point scheme based on system frame number (SFN) for transmission, and Rel-18 standardized a CJT scheme with an increase of less than or equal to four transmission point MTRP.

In a CJT scheme, the base station needs to perform joint precoding transmission and data coherent transmission for multiple transmission points of multi-point coordination.

Currently, Rel-17 has only standardized and enhanced channel state information (CSI) measurement feedback for a NCJT coordinated transmission scheme with a maximum of two transmission points. Specifically, a terminal calculates precoding information based on each transmission point separately, and a traditional codebook design and precoder matrix indicator (PMI) reporting based on single-point transmission are still applicable to NCJT. Therefore, a traditional type II codebook design and PMI reporting are only applicable to single-point transmission way or NCJT way, and are not applicable to a multi-point joint CJT, resulting in inability to adopt multi-point joint CJT and a problem of low system reliability.

In view of the above problems, embodiments of the present application mainly design a joint codebook for multiple transmission points in a CJT way, and the terminal can perform joint channel measurement and channel state reporting based on coordinated results of all transmission points, thereby improving reliability of a system.

In order to make purposes, solutions and advantages of embodiments of the present application clearer, solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

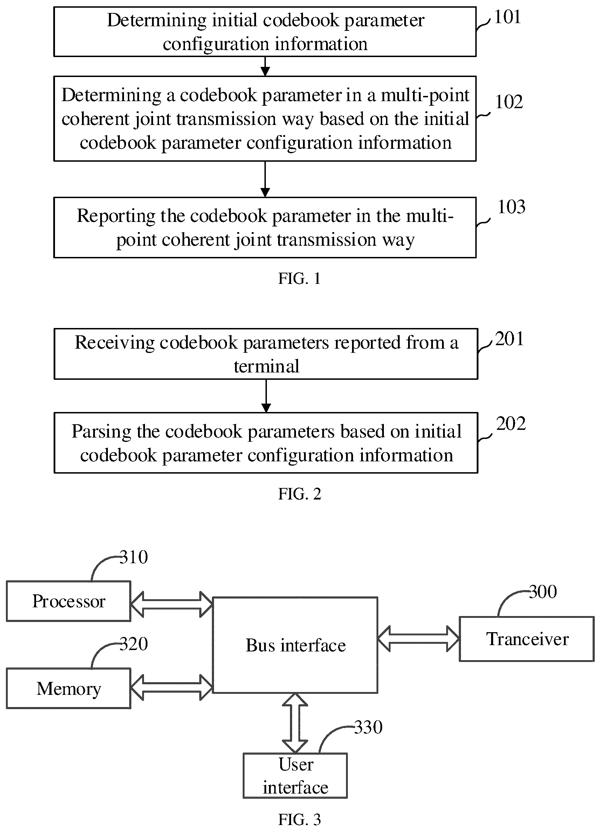

FIG. 1 is a first schematic flowchart of a method for codebook parameter transmission according to an embodiment of the present application. As shown in FIG. 1, an embodiment of the present application provides a method for codebook parameter transmission, which may be performed by a terminal, such as a mobile phone, etc. The method includes the following steps.

Step 101: determining initial codebook parameter configuration information.

Step 102: determining a codebook parameter in a multi-point coherent joint transmission way based on the initial codebook parameter configuration information.

Step 103: reporting the codebook parameter in the multi-point coherent joint transmission way.

Optionally, the initial codebook parameter configuration information is predefined.

Optionally, the initial codebook parameter configuration information is configured by a network device. The network device transmits the initial codebook parameter configuration information to the terminal, and the terminal receives the initial codebook parameter configuration information transmitted by the network device.

Optionally, the initial codebook parameter configuration information may include one or more of the following information:

a spatial domain beam quantity;

a frequency domain basis vector quantity; or

an indication of a non-zero coefficient quantity.

Optionally, the spatial domain beam quantity may include one or more of the following:

a single spatial domain beam quantity;

multiple spatial domain beam quantities; or

a first index, where the first index is used to indicate multiple spatial domain beam quantities.

Optionally, the frequency domain basis vector quantity may include one or more of the following:

a single frequency domain basis vector quantity;

multiple frequency domain basis vector quantities; or

a second index, where the second index is used to indicate multiple frequency domain basis vector quantities.

Optionally, the codebook parameter may include codebook parameter information (codebook parameter itself) and/or a quantity of codebook parameters.

The codebook parameter may include one or more of the following parameters:

channel state information (CSI);

a spatial domain beam;

a frequency domain basis vector; or

a non-zero coefficient.

Optionally, the terminal determines the following codebook parameters based on the initial codebook parameter configuration information predefined by a system or configured by the base station.

Optionally, the terminal determines the spatial domain beam quantity based on the initial codebook parameter configuration information predefined by the system or configured by the base station, and the terminal reports a multi-point joint spatial domain beam quantity and/or spatial domain beam information based on a CJT assumption.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X.

For example, based on the single spatial domain beam quantity predefined by the system or configured by the base station, the terminal can determine all the spatial domain beam information of a multi-point transmission based on the following ways, and report it to a base station side.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X.

For example, the terminal obtains the spatial domain beam quantity configuration information X based on the single spatial domain beam configuration information, and determines the spatial domain beam quantity $L_1 = L_2 =,..., = L_i =,..., = L_I = X$ of each transmission point/transmission point group, where $L_i$ is a spatial domain beam quantity of an i-th transmission point/transmission point group, and I is a quantity of all transmission points/transmission point groups in multi-point coordination.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X/I, and I is a quantity of the multiple spatial domain beam quantities.

For example, the terminal obtains the spatial domain beam quantity configuration information X based on the single spatial domain beam configuration information, and determines the spatial domain beam quantity $L_1 = L_2 =,..., = L_i =,..., = L_I = X$ of each transmission point/transmission point group, where $L_i$ is a spatial domain beam quantity of an i-th transmission point/transmission point group, and I is a quantity of all transmission points/transmission point groups in multi-point coordination.

In some embodiments, determining the multiple spatial domain beam quantities in the multi-point coherent joint transmission way based on the single spatial domain beam quantity X includes:

determining an i-th spatial domain beam quantity, where the i-th spatial domain beam quantity is $L_i$, $\sum_{i=1}^{I} L_i = X$, and I is a quantity of the multiple spatial domain beam quantities.

For example, the terminal obtains the spatial domain beam quantity configuration information X based on the single spatial domain beam configuration information, and determines the spatial domain beam quantity $L_1, L_2, ..., L_i, ..., L_I$ of each transmission point/transmission point group by itself, where $\sum_{i=1}^{I} L_i = X$, $L_i$ is a spatial domain beam quantity of an i-th transmission point/transmission point group, and I is a quantity of all transmission points/transmission point groups in multi-point coordination.

Optionally, in addition to reporting the spatial domain recommendation beam information, the terminal may add spatial domain beam allocation results of all transmission points/transmission point groups in field1 in PMI reporting.

Optionally, in addition to reporting the spatial domain recommendation beam information, the terminal may add spatial domain beam allocation results of all transmission points/transmission point groups in part1 in CSI reporting.

In some embodiments, determining the i-th spatial domain beam quantity includes:

determining the i-th spatial domain beam quantity based on i-th channel estimation information.

For example, the terminal dynamically selects the spatial domain beam quantity based on a channel estimation from different transmission points to the terminal while taking a reference signal receiving power (RSRP) of a transmission point being the highest as a loop, and a spatial domain beam quantity for each transmission point ranges from $0 \leq L_i \leq X$.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information.

For example, the terminal determines the spatial domain configuration information of all transmission points/transmission point groups based on the multiple spatial domain beam configuration information, and reports spatial domain recommendation beams of all transmission points/transmission point groups.

The terminal obtains the spatial domain beam quantity configuration information $X_1, X_2, ...., X_i, ...., X_J$ based on the multiple spatial domain beam configuration information, and determines the spatial domain beam quantity of each transmission point/transmission point group, where $L_1 = X_1, L_2 = X_2, ..., L_i = X_i, ..., L_I = X_I$, I is a quantity of all transmission points/transmission point groups reported in multi-point coordination, J is a quantity of the multiple spatial domain beam quantities included in the spatial domain beam configuration information, and $J \geq I$.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a first index, determining multiple spatial domain beam quantities in the multi-point coherent joint transmission way based on the first index, where the first index is used to indicate the multiple spatial domain beam quantities.

For example, the terminal jointly determines the spatial domain configuration information of all transmission points/transmission point groups based on a single spatial domain beam configuration information and additional combination indication information of the spatial domain configuration information of all transmission points/transmission point groups, and reports spatial domain recommendation beams of all transmission points/transmission point groups.

Optionally, the additional combination indication information of the spatial domain configuration information of all transmission points/transmission point groups can be configured by a predefined way, higher layer signaling, or dynamic downlink control information (DCI) indication signaling.

Optionally, the terminal may determine multiple candidate $L_j$ allocation ways through the additional combination indication information, and recommend to report a kind of additional combination information $i_{1,3}$ of the spatial domain configuration information of all transmission points/transmission point groups based on a current measurement quantity i.

Optionally, in addition to reporting the spatial domain recommendation beam information, the terminal may add additional combination information $i_{1,3}$ of the spatial domain configuration information of all transmission points/transmission point groups in field1 in the PMI reporting.

Optionally, in addition to reporting the spatial domain recommendation beam information, the terminal may add an additional combination result of the spatial domain configuration information of all transmission points/transmission point groups in part1 in the CSI reporting.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y.

For example, the terminal determines the frequency domain basis vector (beam) quantity based on the initial codebook parameter configuration information predefined by the system or configured by the base station, and the terminal reports a multi-point joint frequency domain basis vector (beam) quantity and/or frequency domain basis vector (beam) information based on a CJT assumption.

Optionally, the reported frequency domain basis vector information can be reported separately for each data transmission layer, or can be reported uniformly and jointly for all data transmission layers.

For example, based on a configured or predefined single frequency domain basis vector factor, the terminal can determine all frequency domain basis vector information of multi-point transmission based on the following ways and report it to the base station side.

The terminal determines frequency domain basis vector configuration factors of all transmission points/transmission point groups based on single frequency domain basis vector configuration information, and reports frequency domain recommendation basis vector information of all transmission points/transmission point groups.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is $Y*N3/R$, N3 is a subband size of a current precoder matrix indicator (PMI), and R is a subband factor.

For example, the terminal obtains the frequency domain basis vector quantity configuration factor Y based on the single frequency domain basis vector configuration information, and determines the frequency domain basis vector quantity $M_1 = M_2 =,..., = M_i = ,..., = M_I = Y * N3/R$ of each transmission point/transmission point group, where $M_i$ is a frequency domain basis vector quantity of an i-th transmission point/transmission point group, I is a quantity of all transmission points/transmission point groups in multi-point coordination, N3 is a subband size of a current PMI, and R is a subband factor.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities.

For example, the terminal obtains the frequency domain basis vector quantity configuration factor Y based on the single frequency domain basis vector configuration information, and determines the frequency domain basis vector quantity $M_1 = M_2 = ,..., = M_i = ,..., = M_I = (Y * N3)/(R * I)$ of each transmission point/transmission point group, where $M_i$ is a frequency domain basis vector quantity of an i-th transmission point/transmission point group, I is a quantity of all transmission points/transmission point groups in multi-point coordination, N3 is a subband size of a current PMI, and R is a subband factor.

In some embodiments, determining the multiple frequency domain basis vector quantities in the multi-point coherent joint transmission way based on the single frequency domain basis vector quantity Y includes:

determining an i-th frequency domain basis vector quantity, where the i-th frequency domain basis vector quantity is $M_i$,

$$\sum_{i=1}^{I} M_i = Y$$, and I is a quantity of the multiple frequency domain basis vector quantities.

For example, the terminal obtains the frequency domain basis vector quantity configuration factor Y based on the single frequency domain basis vector configuration information, and determines the frequency domain basis vector quantity $M_1$, $M_2$, ..., $M_i$, ..., $M_I$ of each transmission point/transmission point group by itself, where

$$\sum_{i=1}^{I} M_i = (Y * N3)/(R * I)$$, $M_i$ is a frequency domain basis vector quantity of an i-th transmission point/transmission point group, I is a quantity of all transmission points/transmission point groups in multi-point coordination, N3 is a subband size of a current PMI, and R is a subband factor.

Optionally, in addition to reporting the frequency domain recommendation basis vector information, the terminal may add frequency domain recommendation basis vector allocation results of all transmission points/transmission point groups in field1 in the PMI reporting.

Optionally, in addition to reporting the frequency domain recommendation basis vector information, the terminal may add frequency domain recommendation basis vector quantity allocation results of all transmission points/transmission point groups in part1 in the CSI reporting.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information.

For example, the terminal determines the frequency domain recommendation basis vector configuration factors of all transmission points/transmission point groups based on multiple frequency domain basis vector configuration information, and reports frequency domain recommendation basis vectors of all transmission points/transmission point groups.

For example, the terminal obtains frequency domain recommendation basis vector configuration information $Y_1$, $Y_2$, ...., $Y_i$, ...., $Y_J$ based on the multiple frequency domain basis vector configuration information, and determines a frequency domain recommendation basis vector $M_1 = Y_1$, $M_2 = Y_2$, ..., $M_i = Y_i$, ..., $M_I = Y_I$ of each transmission point/transmission point group, where I is a quantity of all transmission points/transmission point groups reported in multi-point coordination, and J is a quantity of the multiple frequency domain basis vector quantities included in the frequency domain basis vector configuration information, and $J \geq I$.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a second index, determining multiple frequency domain basis vector quantities in the multi-point coherent joint transmission way based on the second index, where the second index is used to indicate the multiple frequency domain basis vector quantities.

For example, the terminal jointly determines the frequency domain basis vector configuration information of all transmission points/transmission point groups based on a single frequency domain basis vector configuration information and additional combination indication information of the frequency domain basis vector configuration information of all transmission points/transmission point groups, and reports the frequency domain recommendation basis vectors of all transmission points/transmission point groups.

Optionally, the additional combination indication information of the frequency domain basis vector information of all transmission points/transmission point groups can be configured by a predefined way, higher layer signaling, or dynamic DCI indication signaling.

Optionally, the terminal may determine multiple candidate $M_j$ allocation ways through the additional combination indication information, and recommend to report a kind of additional combination information $i_{1,3}$ of the frequency domain configuration information of all transmission points/transmission point groups based on a current measurement quantity i.

Optionally, in addition to reporting the frequency domain recommendation basis vector information, the terminal may add additional combination information $i_{1,8}$ of the frequency domain basis vector information of all transmission points/transmission point groups in field1 in the PMI reporting.

Optionally, in addition to reporting the frequency domain recommendation basis vector information, the terminal may add an additional combination result of the frequency domain configuration information of all transmission points/transmission point groups in part1 in the CSI reporting.

In some embodiments, reporting the codebook parameter in the multi-point coherent joint transmission way includes:

reporting one frequency domain basis vector; or

reporting multiple frequency domain basis vectors.

For example, the terminal may report joint frequency domain recommendation basis vector information based on all transmission points, where all transmission points correspond to one frequency domain basis vector.

For example, the terminal reports frequency domain recommendation basis vector information of each transmission point respectively, where one transmission point corresponds to one frequency domain basis vector.

For example, taking a transmission point group as a unit, the terminal reports the joint frequency domain recommendation basis vector information of the transmission point group respectively, and all transmission points in the group may report one joint frequency domain recommendation basis vector information.

Optionally, the terminal may also report the offset value $i_{1,8}$ of frequency domain basis vector of different transmission points/transmission point groups.

In some embodiments, in case that the initial codebook parameter configuration information is an indication of a non-zero coefficient quantity, determining the codebook parameter in the multi-point coherent joint transmission way based on the initial codebook parameter configuration information includes: determining multiple non-zero coefficient quantities in the multi-point coherent joint transmission way based on the indication of the non-zero coefficient quantity.

For example, the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

Optionally, the reported frequency domain basis vector information may be reported separately for each data transmission layer, or may be reported uniformly and jointly for all data transmission layers.

For example, the terminal reports recommended reporting non-zero coefficients for each transmission point based on the indication of the non-zero coefficient quantity, and reports a strongest coefficient index (SCI) of each transmission point in the non-zero coefficients in each transmission point.

For example, the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

For example, the terminal reports the recommended reporting non-zero coefficients for each transmission point based on the indication of the non-zero coefficient quantity, and reports the SCI of the first transmission point in the non-zero coefficients in each transmission point. The first transmission point is one of the multiple transmission points.

For example, the terminal reports the recommended reporting non-zero coefficients for each transmission point group based on the indication of the non-zero coefficient quantity, and reports the SCI of a first transmission point in a first transmission point group in the non-zero coefficients of each transmission point group. The first transmission point group is one of the transmission point groups among multiple transmission point groups, and the first transmission point is one of the transmission points in the first transmission point group. In the transmission point group, the non-zero coefficients are jointly reported between each transmission point.

In some embodiments, the method further includes:
performing differential quantization on the non-zero coefficients.

For example, the terminal performs differential quantization on all non-zero coefficients through the following quantization schemes based on all the determined non-zero coefficients.

For example, for each data layer, each transmission point/transmission point group has $2*Li*Mi$ (where spatial domain is Li, and frequency domain is Mi) non-zero coefficients. Firstly, in each transmission point/transmission point group, differential quantization is performed on $Li*Mi-1$ non-zero coefficients in a polarization direction where an SCI of each layer is located, and differential quantization is then performed on $Li*Mi$ non-zero coefficients in a first polarization direction, which is another polarization direction.

For example, for each data layer, each transmission point has $2*Li*Mi$ non-zero coefficients. In all transmission points, differential quantization is performed on $i*Li*Mi-1$ non-zero coefficients in a polarization direction where an SCI of a first transmission point of each layer is located, and differential quantization is then performed on $Li*Mi$ non-zero coefficients in a first polarization direction, which is another polarization direction.

For example, for each data layer, each transmission point has $2*Li*Mi$ non-zero coefficients. In all transmission points, differential quantization is performed on $i*Li*Mi-1$ non-zero coefficients in a polarization direction where an SCI of a first transmission point in a first transmission point group of each layer is located, and differential quantization is then performed on $Li*Mi$ non-zero coefficients in a first polarization direction, which is another polarization direction.

Optionally, in case that the frequency domain basis vectors and non-zero coefficients are reported jointly by all layers, the above scheme performs joint differential for all layers, that is, on $2* Li*Mi$ non-zero coefficients.

In the method for codebook parameter transmission provided by the embodiment of the present application, the terminal determines and reports the codebook parameter in the multi-point coherent joint transmission way based on the initial codebook parameter configuration information, thereby reporting a joint codebook parameter under an assumption of a coordinated multi-point transmission scheme, and improving reliability of the system.

FIG. 2 is a second schematic flowchart of a method for codebook parameter transmission according to an embodiment of the present application. As shown in FIG. 2, an embodiment of the present application provides a method for codebook parameter transmission, which may be performed by a network device, such as a base station, etc. The method includes the following steps.

Step 201: receiving a codebook parameter reported from a terminal.

Step 202: parsing the codebook parameter based on initial codebook parameter configuration information.

In some embodiments, the initial codebook parameter configuration information is predefined or configured by the network device.

In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

For example, the base station indicates the initial codebook parameter configuration information to the terminal, receives the codebook parameters reported from the terminal (in the embodiment of the present application, CSI information is taken as an example for describing), and decodes the CSI information based on information reported from the terminal and/or predefined by the system.

Based on different overheads/bit widths corresponding to different terminal reporting ways, a base station side determines an information bit to decode the spatial domain beam information.

Optionally, the base station decodes the CSI information based on a single reporting information (TRP-common) and the information bit, and determines the spatial domain recommendation beams for all transmission points/transmission point groups.

Optionally, the base station decodes the CSI information based on the single reporting information (TRP-common) and an information bit of Table 2, determines that a quantity of spatial domain recommendation beams of all transmission points/transmission point groups is the same and consistent with a configured quantity, and determines a spatial domain recommendation beam of each transmission point/transmission point group based on the quantity of spatial domain recommendation beams of all transmission points/transmission point groups.

Table 2

| $i_{1,1,i}$ | $i_{1,2,i}$ |
|---|---|
| $\lceil \log_2(O_1 O_2) \rceil$ | $\left\lceil \log_2 \binom{N_1 N_2}{X} \right\rceil$ |

Optionally, the base station decodes the CSI information based on the single reporting information (TRP-common) and an information bit of Table 3, determines that the quantity of spatial domain recommendation beams of all transmission points/transmission point groups is the same, where a sum of all the quantities of spatial domain recommendation beams is consistent with a configured quantity, and determines a spatial domain recommendation beam of each transmission point/transmission point group based on the quantity of spatial domain recommendation beams of all transmission points/transmission point groups.

Table 3

| $i_{1,1,i}$ | $i_{1,2,i}$ |
|---|---|
| $\lceil \log_2(O_1 O_2) \rceil$ | $\left\lceil \log_2 \binom{N_1 N_2}{X/i} \right\rceil$ |

Optionally, the base station decodes the CSI information based on the single reporting information (TRP-common) and an information bit, determines the quantity of spatial domain recommendation beams of all transmission points/transmission point groups based on an allocation results reported from the terminal, where a sum of all the quantities of spatial domain recommendation beams is consistent with a configured quantity, $\sum_1^i L_i = X$, and i is a quantity of all transmission points/transmission point groups in multi-point coordination, and determines a spatial domain recommendation beam of each transmission point/transmission point group based on the quantity of spatial domain recommendation beams of all transmission points/transmission point groups.

Optionally, in addition to reporting the spatial domain recommendation beam information, the terminal may add spatial domain beam allocation results of all transmission points/transmission point groups in part1 in the PMI reporting, as shown in Table 4.

Table 4

| $i_{1,1,i}$ | $i_{1,2,i}$ | $i_{1,3,i}$ |
|---|---|---|
| $\lceil \log_2(O_1 O_2) \rceil$ | $\left\lceil \log_2 \binom{N_1 N_2}{L_i} \right\rceil$ | $\left\lceil \log_2 \binom{X}{L_i} \right\rceil$ |

Optionally, in addition to reporting the spatial domain recommendation beam information, the terminal may add spatial domain beam allocation results of all transmission points/transmission point groups in part1 in the CSI reporting, as shown in Table 5.

Table 5

| CSI part1 | |
|---|---|
| RI (if reported) CQI KNZ | Spatial domain beam allocation results of all transmission points/transmission point groups |
| | $i * \left\lceil \log_2 \binom{X}{L_i} \right\rceil$ |

In some embodiments, the base station decodes the CSI information based on multiple reporting information (TRP specific) and an information bit of Table 6, and determines spatial domain recommendation beam information of all transmission points/transmission point groups.

For example, the terminal obtains spatial domain beam quantity configuration information $X_1, X_2, ...., X_j$ based on multiple spatial domain beam configuration information, determines spatial domain beam quantities $L_1 = X_1, L_2 = X_2, ..., L_i = X_i$ of each transmission point/transmission point group, where i is a quantity of all transmission points/transmission point groups reported in multi-point coordination, and determines a spatial domain recommendation beam of each transmission point/transmission point group based on the quantity of spatial domain recommendation beams of all transmission points/transmission point groups.

Table 6

| $i_{1,1,i}$ | $i_{1,2,i}$ |
|---|---|
| $\lceil \log_2(O_1 O_2) \rceil$ | $\left\lceil \log_2 \binom{N_1 N_2}{X_i} \right\rceil$ |

In some embodiments, the base station jointly determines an information bit based on the single configuration information and an additional transmission point combination allocation configuration to decode CSI information, determines a quantity of spatial domain recommendation beams of all transmission points/transmission point groups, and determines a spatial domain recommendation beam of each transmission point/transmission point group based on the quantity of spatial domain recommendation beams of all transmission points/transmission point groups.

Optionally, the additional combination indication information of the spatial domain configuration information of all transmission points/transmission point groups can be configured by a predefined way, higher layer signaling, or dynamic DCI indication signaling.

Optionally, the terminal may determine multiple candidate $L_j$ allocation ways through the additional combination indication information, and recommend to report a kind of additional combination information $i_{1,3}$ of the spatial domain configuration information of all transmission points/transmission point groups based on a current measurement quantity i.

Optionally, in addition to reporting the spatial domain recommendation beam information, the terminal may add additional combination information $i_{1,3}$ of the spatial domain configuration information of all transmission points/transmission point groups in field1 in the PMI reporting, as shown in Table 7.

Table 7

| $i_{1,1,i}$ | $i_{1,2,i}$ | $i_{1,3}$ |
|---|---|---|
| $\lceil \log_2(O_1 O_2) \rceil$ | $\left\lceil \log_2 \binom{N_1 N_2}{L_i} \right\rceil$ | $\lceil \log_2 combiantion \rceil$ |

Optionally, in addition to reporting the spatial domain recommendation beam information, the terminal may add an additional combination result of the spatial domain configuration information of all transmission points/transmission point groups in part1 in the CSI reporting, as shown in Table 8.

Table 8

| CSI part1 | |
|---|---|
| RI (if reported)<br>CQI<br>KNZ | Additional combination result of the spatial domain configuration information of all transmission points/transmission point groups<br><br>$i * \lceil \log_2 combiantion \rceil$ |

Based on different overheads/bit widths corresponding to different terminal reporting ways described in Table 1, the base station side determines an information bit to decode the frequency domain beam information

Optionally, the base station decodes the CSI information based on the single reporting information (TRP-common) and the information bit, and determines the frequency domain recommendation basis vectors of all transmission points/transmission point groups.

Optionally, the base station decodes the CSI information based on the single reporting information (TRP-common) and the information bit, determines that a quantity of frequency domain recommendation basis vectors of all transmission points/transmission point groups is the same and consistent with a configured quantity, and determines a frequency domain recommendation basis vector of each transmission point/transmission point group based on the quantity of frequency domain recommendation basis vectors of all transmission points/transmission point groups.

Optionally, configuration or predefined information of the base station, in case that the terminal reports separately for each data transmission layer, is as shown in Table 9.

Table 9

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\lceil \log_2(2M) \rceil$<br><br>or<br><br>N/A($N_3$<19) | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ |

In case that the terminal can perform unified joint reporting for all data transmission layers, it is as shown in Table 10.

Table 10

| $i_{1,5,i}$ $\lceil \log_2(2M) \rceil$<br>or N/A($N_3$<19) | $i_{1,6,i}$<br><br>$\left\lceil \log_2 \binom{N_3 - 1}{M - 1} \right\rceil$ |
|---|---|

Optionally, the base station decodes the CSI information based on the single reporting information (TRP-common) and the information bit, determines that a quantity of frequency domain recommendation basis vectors of all transmission points/transmission point groups is the same, where a sum of all the quantities of frequency domain recommendation basis vectors is consistent with a configured quantity, and determines a frequency domain recommendation basis vector of each transmission point/transmission point group based on the quantity of frequency domain recommendation basis vectors of all transmission points/transmission point groups.

Optionally, configuration or predefined information of the base station, in case that the terminal reports separately for each data transmission layer, is as shown in Table 11.

Table 11

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\left\lceil \log_2\left(\frac{2M}{i}\right) \right\rceil$ or N/A($N_3 < 19$) | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ |

In case that the terminal can perform unified joint reporting for all data transmission layers, it is as shown in Table 12.

Table 12

| $i_{1,5,i}$ | $i_{1,6,i}$ |
|---|---|
| $\left\lceil \log_2\left(\frac{2M}{i}\right) \right\rceil$ or N/A($N_3 < 19$) | $\left\lceil \log_2\left(\frac{N_3-1}{\frac{M}{i}-1}\right) \right\rceil$ |

Optionally, the base station decodes the CSI information based on the single reporting information (TRP-common) and the information bit, determines a quantity of frequency domain recommendation basis vectors of all transmission points/transmission point groups based on an allocation result reported from the terminal, where a sum of all the quantities of frequency domain recommendation basis vectors is consistent with a configured quantity, $\sum_1^i M_i = M$ and i is a quantity of all transmission points/transmission point groups in multi-point coordination, and determines a frequency domain recommendation basis vector of each transmission point/transmission point group based on the quantity of frequency domain recommendation basis vectors of all transmission points/transmission point groups.

Optionally, in addition to reporting the frequency domain recommendation basis vector information, the terminal may add frequency domain basis vector allocation results of all transmission points/transmission point groups in field1 in the PMI reporting.

Optionally, configuration or predefined information of the base station, in case that the terminal reports separately for each data transmission layer, is as shown in Table 13.

Table 13

| $i_{1,5,i}$ | $i_{1,6,1,i}$ | $i_{1,6,2,i}$ | $i_{1,6,3,i}$ | $i_{1,6,4,i}$ | $i_{1,8,i}$ |
|---|---|---|---|---|---|
| $\left\lceil \log_2\left(\frac{2M}{i}\right) \right\rceil$ or N/A($N_3 < 19$) | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{Y}{M_i}\right) \right\rceil$ |

In case that the terminal can perform unified joint reporting for all data transmission layers, it is as shown in Table 14.

Table 14

| $i_{1,5,i}$ | $i_{1,6,i}$ | $i_{1,8,i}$ |
|---|---|---|
| $\left\lceil \log_2\left(\frac{2M}{i}\right) \right\rceil$ or N/A($N_3 < 19$) | $\left\lceil \log_2\left(\frac{N_3-1}{\frac{M}{i}-1}\right) \right\rceil$ | $\left\lceil \log_2\left(\frac{Y}{M_i}\right) \right\rceil$ |

Optionally, in addition to reporting the frequency domain recommendation basis vector information, the terminal may add frequency domain basis vector allocation results of all transmission points/transmission point groups in part1 in the CSI reporting, as shown in Table 15.

Table 15

| CSI part 1 | |
|---|---|
| RI (if reported) <br> CQI <br> KNZ | Frequency domain basis vector allocation results of all transmission points/transmission point groups <br><br> $i * \left\lceil \log_2 \binom{Y}{M_i} \right\rceil$ |

Optionally, the base station decodes the CSI information based on multiple reported information (TRP specific) and the information bit, and determines frequency domain recommendation basis vector information for all transmission points/transmission point groups.

Optionally, the terminal obtains frequency domain basis vector quantity configuration information $X_1$, $X_2$, ...., $X_j$ based on multiple frequency domain basis vector configuration information, determines frequency domain basis vector quantities $M_1 = Y_1$, ..., $M_i = Y_i$ of each transmission point/transmission point group, where i is a quantity of all transmission points/transmission point groups reported in multi-point coordination, and determines a frequency domain recommendation basis vector of each transmission point/transmission point group based on the quantity of frequency domain recommendation basis vectors of all transmission points/transmission point groups.

Optionally, configuration or predefined information of the base station, in case that the terminal reports separately for each data transmission layer, is as shown in Table 16.

Table 16

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\lceil \log_2(2M_i) \rceil$ <br><br> or N/A($N_3$ < 19) | $\left\lceil \log_2 \binom{N_3 - 1}{M_i - 1} \right\rceil$ | $\left\lceil \log_2 \binom{N_3 - 1}{M_i - 1} \right\rceil$ | $\left\lceil \log_2 \binom{N_3 - 1}{M_i - 1} \right\rceil$ | $\left\lceil \log_2 \binom{N_3 - 1}{M_i - 1} \right\rceil$ |

In case that the terminal can perform unified joint reporting for all data transmission layers, it is as shown in Table 17.

Table 17

| $i_{1,5,i}$ | $i_{1,6,i}$ |
|---|---|
| $\lceil \log_2(2M_i) \rceil$ or N/A($N_3$<19) | $\left\lceil \log_2 \binom{N_3 - 1}{M_i - 1} \right\rceil$ |

Optionally, the base station jointly determines an information bit based on the single configuration information and an additional transmission point combination allocation configuration to decode CSI information, determines a quantity of frequency domain recommendation basis vectors of all transmission points/transmission point groups, and determines a frequency domain recommendation basis vector of each transmission point/transmission point group based on the quantity of frequency domain recommendation basis vectors of all transmission points/transmission point groups.

Optionally, the additional combination indication information of the frequency domain configuration information of all transmission points/transmission point groups can be configured by a predefined way, higher layer signaling, or dynamic DCI indication signaling.

Optionally, the terminal may determine multiple candidate $L_j$ allocation ways through the additional combination indication information, and recommend to report a kind of additional combination information $i_{1,3}$ of the frequency domain configuration information of all transmission points/transmission point groups based on a current measurement quantity i.

Optionally, in addition to reporting the frequency domain recommendation basis vector information, the terminal may add additional combination information $i_{1,8}$ of the frequency domain configuration information of all transmission points/transmission point groups in field1 in the PMI reporting.

Optionally, configuration or predefined information of the base station, in case that the terminal reports separately for each data transmission layer, is as shown in Table 18.

Table 18

| $i_{1,5,i}$ $\left\lceil\log_2\left(\frac{2M}{i}\right)\right\rceil$ or N/A($N_3 <$ 19) | $i_{1,6,1,i}$ $\left\lceil\log_2\left(\frac{N_3-1}{\frac{M}{i}-1}\right)\right\rceil$ | $i_{1,6,2,i}$ $\left\lceil\log_2\left(\frac{N_3-1}{\frac{M}{i}-1}\right)\right\rceil$ | $i_{1,6,3,i}$ $\left\lceil\log_2\left(\frac{N_3-1}{\frac{M}{i}-1}\right)\right\rceil$ | $i_{1,6,4,i}$ $\left\lceil\log_2\left(\frac{N_3-1}{\frac{M}{i}-1}\right)\right\rceil$ | $i_{1,8,i}$ Additional combination result of the frequency domain configuration information of each transmission point/-transmission point group $\lceil\log_2 combiantion\rceil$ |
|---|---|---|---|---|---|
| | | | | | |

In case that the terminal can perform unified joint reporting for all data transmission layers, it is as shown in Table 19.

Table 19

| $i_{1,5,i}$ $\left\lceil\log_2\left(\frac{2M}{i}\right)\right\rceil$ or N/A($N_3<19$) | $i_{1,6,i}$ $\left\lceil\log_2\left(\frac{N_3-1}{\frac{M}{i}-1}\right)\right\rceil$ | $i_{1,8,i}$ Additional combination result of the frequency domain configuration information of each transmission point/transmission point group $\lceil\log_2 combiantion\rceil$ |
|---|---|---|
| | | |

Optionally, in addition to reporting the frequency domain recommendation basis vector information, the terminal may add an additional combination result of the frequency domain configuration information of all transmission points/transmission point groups in part1 in the CSI reporting, as shown in Table 20.

Table 20

| | CSI part1 |
|---|---|
| RI (if reported) CQI KNZ | Additional combination result of the frequency domain configuration information of all transmission points/transmission point groups $i * \lceil\log_2 combiantion\rceil$ |

Methods for determining a quantity i of all transmission points/transmission point groups reported in multi-point coordination are as follows.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Methods for determining a quantity $i_{1,1}$ of all measured transmission points/transmission point groups reported in multi-point coordination are as follows.

Method 1: selection for $O_1O_2$ block is consistent, and the L beams in the block are selected separately.

Method 2: the $O_1O_2$ block and the L beams in the block are selected separately.

In the method for codebook parameter transmission provided by the embodiments of the present application, the network device determines and receives the codebook parameter in the multi-point coherent joint transmission way based on the initial codebook parameter configuration information, thereby reporting a joint codebook parameter under an assumption of a coordinated multi-point transmission scheme, and improving reliability of the system.

Several specific examples are taken in the following to further explain the methods in the above embodiment.

Example 1:

Step 1: the terminal receives a CSI codebook configuration parameter. Specifically, the base station can indicate the CSI codebook configuration parameter to the terminal by system predefinition or higher layer signaling.

A higher layer signaling method can be configured by a combination of a single spatial domain beam quantity, a spatial domain beam quantity configuration factor Y, and a non-zero coefficient quantity factor.

A higher layer signaling method can be configured separately by each of the above parameters.

Step 2: the terminal obtains a single spatial domain beam quantity indication, determines to obtain spatial domain beam quantity configuration information X based on the single spatial domain beam configuration information, and determines the spatial domain beam quantity $L_1 = L_2 =... = L_i = X$ of each transmission point/transmission point group, where i is a quantity of all transmission points/transmission point groups in multi-point coordination.

Optionally, the terminal obtains a spatial domain beam quantity configuration factor Y based on the single spatial domain beam configuration information, and determines the spatial domain beam quantity $M_1 = M_2 =...= M_i = Y * N3/R$ of each transmission point/transmission point group, where N3 is a subband size of a current PMI, R is a subband factor, and i is a quantity of all transmission points/transmission point groups in multi-point coordination.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Step 4: the terminal reports i pieces of spatial domain beam information. The base station determines an overhead bit width of each spatial domain beam based on Table 21, and determines overhead bit widths of all transmission points/transmission point groups.

Method 1: the $O_1O_2$ block and the L beams in the block are selected separately, as shown in Table 21.

Table 21

| $i_{1,1,i}$ | $i_{1,2,i}$ |
|---|---|
| $\lceil \log_2(O_1O_2) \rceil$ | $\left\lceil \log_2 \binom{N_1N_2}{X} \right\rceil$ |

Method 2: all transmission points/groups report one $O_1O_2$ block, and the L beams in the block are selected separately, as shown in Table 22.

Table 22

| $i_{1,i}$ | $i_{1,2,i}$ |
|---|---|
| $\lceil \log_2(O_1O_2) \rceil$ | $\left\lceil \log_2 \binom{N_1N_2}{X} \right\rceil$ |

Step 5-1: the terminal reports i pieces of frequency domain basis vector information. The base station determines an overhead bit width of each spatial domain beam based on Table 23, and determines overhead bit widths of all transmission points/transmission point groups.

Optionally, configuration or predefined information of the base station, in case that the terminal reports separately for each data transmission layer, is as shown in Table 23.

Table 23

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\lceil \log_2(2M) \rceil$ or N/A($N_3$<19) | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ |

In case that the terminal can perform unified joint reporting for all data transmission layers, it is as shown in Table 24.

Table 24

| $i_{1,5,i}$ | $i_{1,6,i}$ |
|---|---|
| $\lceil \log_2(2M) \rceil$ or N/A($N_3$<19) | $\left\lceil \log_2 \binom{N_3 - 1}{M - 1} \right\rceil$ |

Step 5-2: the terminal reports one piece of joint frequency domain basis vector information. The base station determines an overhead bit width of each spatial domain beam based on Table 25, and determines overhead bit widths of all transmission points/transmission point groups.

Optionally, configuration or predefined information of the base station, in case that the terminal reports separately for each data transmission layer, is as shown in Table 25.

Table 25

| $i_{1,5}$ | $i_{1,6,1}$ | $i_{1,6,2}$ | $i_{1,6,3}$ | $i_{1,6,4}$ |
|---|---|---|---|---|
| $\lceil \log_2(2M) \rceil$ or N/A($N_3$<19) | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ | $\left\lceil \log_2 \binom{N_3 - 1}{M - 1} \right\rceil$ |

In case that the terminal can perform unified joint reporting for all data transmission layers, it is as shown in Table 26.

Table 26

| $i_{1,5}$ | $i_{1,6}$ |
|---|---|
| $\lceil \log_2(2M) \rceil$ or N/A($N_3$<19) | $\left\lceil \log_2 \binom{N_3 - 1}{M - 1} \right\rceil$ |

Optionally, the terminal may also report the offset value $i_{1,8}$ of frequency domain basis vector of different transmission points/transmission point groups.

Step 6: the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

Optionally, the reported frequency domain basis vector information may be reported separately for each data transmission layer, or may be reported uniformly and jointly for all data transmission layers.

Step 6-1: the terminal reports recommended reporting non-zero coefficients for each transmission point based on the indication of the non-zero coefficient quantity, and reports an SCI of each transmission point in the non-zero coefficients in each transmission point.

Step 6-2: the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

Step 6-3: the terminal reports the recommended reporting non-zero coefficients for each transmission point based on the indication of the non-zero coefficient quantity, and reports the SCI of the first transmission point in the non-zero coefficients in each transmission point.

Step 6-4: the terminal reports the recommended reporting non-zero coefficients for each transmission point group based on the indication of the non-zero coefficient quantity, and reports the SCI of a first transmission point in a first transmission point group in the non-zero coefficients of each transmission point group. In the transmission point group, the non-zero coefficients are jointly reported between each transmission point.

Step 7: the terminal performs differential quantization on all non-zero coefficients through the following quantization schemes based on all the determined non-zero coefficients.

For each data layer, each transmission point/transmission point group has 2*Li*Mi non-zero coefficients. Firstly, in each transmission point/transmission point group, differential quantization is performed on Li*Mi-1 non-zero coefficients in a polarization direction where an SCI of each layer is located, and differential quantization is then performed on $L_i*M_i$ non-zero coefficients in a first polarization direction, which is another polarization direction.

For each data layer, each transmission point has $2*L_i*M_i$ non-zero coefficients. In all transmission points, differential quantization is performed on $i*L_i*M_i-1$ non-zero coefficients in a polarization direction where an SCI of a first transmission point of each layer is located, and differential quantization is then performed on $L_i*M_i$ non-zero coefficients in a first polarization direction, which is another polarization direction.

For each data layer, each transmission point group has $2*L_i*M_i$ non-zero coefficients. In all transmission points, differential quantization is performed on $i*L_i*M_i-1$ non-zero coefficients in a polarization direction where an SCI of a first transmission point in a first transmission point group of each layer is located, and differential quantization is then performed on $L_i*M_i$ non-zero coefficients in a first polarization direction, which is another polarization direction.

Optionally, in case that the frequency domain basis vectors and non-zero coefficients are reported jointly by all layers, the above scheme performs joint differential for all layers, that is, on $2* L_i*M_i$ non-zero coefficients.

Example 2:

Step 1: the terminal receives a CSI codebook configuration parameter. Specifically, the base station can indicate the CSI codebook configuration parameter to the terminal by system predefinition or higher layer signaling.

A higher layer signaling method can be configured by a combination of a sum of a single spatial domain beam quantity, a compression basis vector factor, and a non-zero coefficient quantity factor.

A higher layer signaling method can be configured separately by a sum of the spatial domain beam quantity.

Step 2: the terminal obtains a single spatial domain beam quantity indication, determines to obtain spatial domain beam quantity configuration information X based on the single spatial domain beam configuration information, and determines the spatial domain beam quantity $L_1 = L_2 =... = L_i = X/i$ of each transmission point/transmission point group, where i is a quantity of all transmission points/transmission point groups in multi-point coordination.

Step 3: the terminal obtains frequency domain basis vector quantity configuration information Y based on the single frequency domain basis vector configuration information, and determines the spatial domain beam quantity $M_1 = M_2 =...= M_i = (Y * N3)/(R * i)$ of each transmission point/transmission point group, where i is a quantity of all transmission points/transmission point groups in multi-point coordination.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Step 4: the terminal reports i pieces of spatial domain beam information. The base station determines an overhead bit width of each spatial domain beam based on Table 27, and determines overhead bit widths of all transmission points/transmission point groups.

Method 1: the $O_1O_2$ block and the L beams in the block are selected separately, as shown in Table 27.

Table 27

| $i_{1,1,i}$ | $i_{1,2,i}$ |
|---|---|
| $\lceil \log_2(O_1O_2) \rceil$ | $\left\lceil \log_2 \binom{N_1N_2}{X} \right\rceil$ |

Method 2: all transmission points/groups report one $O_1O_2$ block, and the L beams in the block are selected separately, as shown in Table 28.

Table 28

| $i_{1,i}$ $\lceil \log_2(O_1O_2) \rceil$ | $i_{1,2,i}$ |
|---|---|
| | $\left\lceil \log_2 \binom{N_1N_2}{X} \right\rceil$ |

Step 5-1: the terminal reports i pieces of frequency domain basis vector information. The base station determines an overhead bit width of each spatial domain beam based on Table 29, and determines overhead bit widths of all transmission points/transmission point groups.

Optionally, configuration or predefined information of the base station, in case that the terminal reports separately for each data transmission layer, is as shown in Table 29.

Table 29

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\left\lceil \log_2\left(\frac{2M}{i}\right) \right\rceil$ or N/A($N_3$<19) | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ |

In case that the terminal can perform unified joint reporting for all data transmission layers, it is as shown in Table 30.

Table 30

| $i_{1,5,i}$ | $i_{1,6,i}$ |
|---|---|
| $\left\lceil \log_2\left(\frac{2M}{i}\right) \right\rceil$ or N/A($N_3$<19) | $\left\lceil \log_2\left(\frac{N_3-1}{\frac{M}{i}-1}\right) \right\rceil$ |

Step 5-2: the terminal reports one piece of joint frequency domain basis vector information. The base station determines an overhead bit width of each frequency domain parameter based on Table 31, and determines overhead bit widths of all transmission points/transmission point groups.

Optionally, configuration or predefined information of the base station, in case that the terminal reports separately for each data transmission layer, is as shown in Table 31.

Table 31

| $i_{1,5}$ | $i_{1,6,1}$ | $i_{1,6,2}$ | $i_{1,6,3}$ | $i_{1,6,4}$ |
|---|---|---|---|---|
| $\left\lceil \log_2\left(\frac{2M}{i}\right) \right\rceil$ or N/A($N_3$<19) | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ | $\left\lceil \log_2\left(\frac{N_3-1}{\frac{M}{i}-1}\right) \right\rceil$ |

In case that the terminal can perform unified joint reporting for all data transmission layers, it is as shown in Table 32.

Table 32

| $i_{1,5}$ | $i_{1,6}$ |
|---|---|
| $\left\lceil \log_2\left(\frac{2M}{i}\right) \right\rceil$ or N/A($N_3$<19) | $\left\lceil \log_2\left(\frac{N_3-1}{\frac{M}{i}-1}\right) \right\rceil$ |

Optionally, the terminal may also report the offset value $i_{1,8}$ of frequency domain basis vector of different transmission points/transmission point groups.

Step 6: the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

Optionally, the reported frequency domain basis vector information may be reported separately for each data transmission layer, or may be reported uniformly and jointly for all data transmission layers.

Step 6-1: the terminal reports recommended reporting non-zero coefficients for each transmission point based on the indication of the non-zero coefficient quantity, and reports an SCI of each transmission point in the non-zero coefficients in each transmission point.

Step 6-2: the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

Step 6-3: the terminal reports the recommended reporting non-zero coefficients for each transmission point based on the indication of the non-zero coefficient quantity, and reports the SCI of the first transmission point in the non-zero coefficients in each transmission point.

Step 6-4: the terminal reports the recommended reporting non-zero coefficients for each transmission point group based on the indication of the non-zero coefficient quantity, and reports the SCI of a first transmission point in a first transmission point group in the non-zero coefficients of each transmission point group. In the transmission point group, the non-zero coefficients are jointly reported between each transmission point.

Step 7: the terminal performs differential quantization on all non-zero coefficients through the following quantization schemes based on all the determined non-zero coefficients.

For each data layer, each transmission point/transmission point group has $2*L_i*M_i$ non-zero coefficients. Firstly, in each transmission point/transmission point group, differential quantization is performed on $L_i*M_i-1$ non-zero coefficients in a polarization direction where an SCI of each layer is located, and differential quantization is then performed on $L_i*M_i$ non-zero coefficients in a first polarization direction, which is another polarization direction.

For each data layer, each transmission point has $2*L_i*M_i$ non-zero coefficients. In all transmission points, differential quantization is performed on $i*L_i*M_i-1$ non-zero coefficients in a polarization direction where an SCI of a first transmission point of each layer is located, and differential quantization is then performed on $L_i*M_i$ non-zero coefficients in a first polarization direction, which is another polarization direction.

For each data layer, each transmission point group has $2*L_i*M_i$ non-zero coefficients. In all transmission points, differential quantization is performed on $i*L_i*M_i-1$ non-zero coefficients in a polarization direction where an SCI of a first transmission point in a first transmission point group of each layer is located, and differential quantization is then performed on $L_i*M_i$ non-zero coefficients in a first polarization direction, which is another polarization direction.

Optionally, in case that the frequency domain basis vectors and non-zero coefficients are reported jointly by all layers, the above scheme performs joint differential for all layers, that is, on $2* L_i*M_i$ non-zero coefficients.

Example 3:

Step 1: the terminal receives a CSI codebook configuration parameter. Specifically, the base station can indicate the CSI codebook configuration parameter to the terminal by system pre-definition or higher layer signaling.

A higher layer signaling method can be configured by a combination of a sum of a single spatial domain beam quantity, a compression basis vector factor, and a non-zero coefficient quantity factor.

A higher layer signaling method can be configured separately by a sum of the spatial domain beam quantity.

Step 2: the terminal obtains a single spatial domain beam quantity indication, determines to obtain spatial domain beam quantity configuration information X based on the single spatial domain beam configuration information, and determines the spatial domain beam quantity $L_1 = L_2 =... = L_i$ of each transmission point/transmission point group based on the following example methods, where i is a quantity of all transmission points/transmission point groups in multi-point coordination.

Step 3: the terminal obtains frequency domain beam quantity configuration information Y based on the single spatial domain beam configuration information, determines the spatial domain beam quantity $M_1 = M_2 =...= M_i$ of each

$$\sum_1^i M_i = \frac{Y*N3}{R*i}$$

transmission point/transmission point group by itself, where , and i is a quantity of all transmission points/transmission point groups in multi-point coordination.

Methods for determining a quantity i of all transmission points/transmission point groups in multi-point coordination are as follows.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Methods for allocating a quantity of each transmission point are as follows.

Method 1: the terminal determines a total quantity X of all transmission points, and determines a quantity of reporting transmission points i based on the above methods. The terminal dynamically selects the spatial domain beam quantity based on a channel estimation Hi from different transmission points to the current terminal while taking a RSRP of a transmission point being the highest as a loop, and a spatial domain beam quantity for each transmission point ranges from $0 \le L_i \le X$.

Step 3: the terminal reports i pieces of spatial domain beam information. The base station determines an overhead bit width of each spatial domain beam based on Table 33, and determines overhead bit widths of all transmission points/transmission point groups.

Optionally, in addition to reporting the spatial domain recommendation beam information, the terminal may add spatial domain beam allocation results of all transmission points/transmission point groups in part1 in the PMI reporting. All transmission points/groups report one $O_1O_2$ block, and the L beams in the block are selected separately, as shown in Table 33.

Table 33

| $i_{1,1}$ $\lceil \log_2(O_1 O_2) \rceil$ | $i_{1,2,i}$ $\left\lceil \log_2 \binom{N_1 N_2}{L_i} \right\rceil$ | $i_{1,3,i}$ $\left\lceil \log_2 \binom{X}{L_i} \right\rceil$ |
|---|---|---|

Optionally, in addition to reporting the spatial domain recommendation beam information, the terminal may add spatial domain beam allocation results of all transmission points/transmission point groups in field1 in the PMI reporting. All transmission points/groups report $O_1O_2$ block separately, and the L beams in the block are selected separately, as shown in Table 34.

Table 34

| $i_{1,1,i}$ $\lceil \log_2(O_1 O_2) \rceil$ | $i_{1,2,i}$ $\left\lceil \log_2 \binom{N_1 N_2}{L_i} \right\rceil$ | $i_{1,3,i}$ $\left\lceil \log_2 \binom{X}{L_i} \right\rceil$ |
|---|---|---|

Optionally, in addition to reporting the spatial domain recommendation beam information, the terminal may add spatial domain beam allocation results of all transmission points/transmission point groups in part1 in the CSI reporting, as shown in Table 35.

Table 35

| CSI part1 | |
|---|---|
| RI (if reported) CQI KNZ | Spatial domain beam allocation results of all transmission points/transmission point groups $\left\lceil \log_2 \binom{X}{L_i} \right\rceil$ |

Allocation method is reported as follows.

Optionally, in addition to reporting the frequency domain recommendation basis vector information, the terminal may add frequency domain recommendation basis vector allocation results of all transmission points/transmission point groups in field1 in the PMI reporting.

Optionally, in addition to reporting the spatial domain recommendation beam information, the terminal may add frequency domain recommendation basis vector quantity allocation results of all transmission points/transmission point groups in part1 in the CSI reporting.

Optionally, the terminal may also report the offset value $i_{1,8}$ of frequency domain basis vector of different transmission points/transmission point groups.

Step 6: the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

Optionally, the reported frequency domain basis vector information may be reported separately for each data transmission layer, or may be reported uniformly and jointly for all data transmission layers.

Step 6-1: the terminal reports recommended reporting non-zero coefficients for each transmission point based on the indication of the non-zero coefficient quantity, and reports an SCI of each transmission point in the non-zero coefficients in each transmission point.

Step 6-2: the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

Step 6-3: the terminal reports the recommended reporting non-zero coefficients for each transmission point based on the indication of the non-zero coefficient quantity, and reports the SCI of the first transmission point in the non-zero coefficients in each transmission point.

Step 6-4: the terminal reports the recommended reporting non-zero coefficients for each transmission point group based on the indication of the non-zero coefficient quantity, and reports the SCI of a first transmission point in a first transmission point group in the non-zero coefficients of each transmission point group. In the transmission point group, the non-zero coefficients are jointly reported between each transmission point.

Step 7: the terminal performs differential quantization on all non-zero coefficients through the following quantization schemes based on all the determined non-zero coefficients.

For each data layer, each transmission point/transmission point group has $2*L_i*M_i$ non-zero coefficients. Firstly, in each transmission point/transmission point group, differential quantization is performed on $L_i*M_i-1$ non-zero coefficients in a polarization direction where an SCI of each layer is located, and differential quantization is then performed on $L_i*M_i$ non-zero coefficients in a first polarization direction, which is another polarization direction.

For each data layer, each transmission point has $2*L_i*M_i$ non-zero coefficients. In all transmission points, differential quantization is performed on $i*L_i*M_i-1$ non-zero coefficients in a polarization direction where an SCI of a first transmission point of each layer is located, and differential quantization is then performed on $L_i*M_i$ non-zero coefficients in a first polarization direction, which is another polarization direction.

For each data layer, each transmission point group has $2*L_i*M_i$ non-zero coefficients. In all transmission points, differential quantization is performed on $i*L_i*M_i-1$ non-zero coefficients in a polarization direction where an SCI of a first transmission point in a first transmission point group of each layer is located, and differential quantization is then performed on $L_i*M_i$ non-zero coefficients in a first polarization direction, which is another polarization direction.

Optionally, in case that the frequency domain basis vectors and non-zero coefficients are reported jointly by all layers, the above scheme performs joint differential for all layers, that is, on $2* L_i*M_i$ non-zero coefficients.

Example 4:

Step 1: the terminal receives a CSI codebook configuration parameter. Specifically, the base station can indicate the CSI codebook configuration parameter to the terminal by system pre-definition or higher layer signaling.

A higher layer signaling method can be configured by combining multiple spatial domain beam quantities, a compression basis vector factor, and a non-zero coefficient quantity factor.

A higher layer signaling method can be configured separately by multiple spatial domain beam quantities.

Optionally, multiple codebook configuration parameters correspond to multiple transmission points/transmission point groups respectively.

Step 2: the terminal obtains an indication of multiple spatial domain beam quantities, determines to obtain spatial domain beam quantity configuration information $X_i$ based on the multiple spatial domain beam configuration information, and determines the spatial domain beam quantity $L_i = X_i$ of each transmission point/transmission point group, where i is a quantity of all transmission points/transmission point groups in multi-point coordination.

Step 3: the terminal determines the frequency domain recommendation basis vector configuration factors of all transmission points/transmission point groups based on multiple frequency domain basis vector configuration information, and reports frequency domain recommendation basis vectors of all transmission points/transmission point groups.

Method 2-1: the terminal obtains the frequency domain recommendation basis vector configuration information $Y_1, Y_2, ..., Y_j$ based on multiple spatial domain beam configuration information, and determines a frequency domain recommendation basis vector $M_1 = Y_1, M_2 = Y_2, ..., M_i = Y_i$, of each transmission point/transmission point group, where i is a quantity of all transmission points/transmission point groups reported in multi-point coordination.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Step 4: the terminal reports i pieces of spatial domain beam information. The base station determines an overhead bit width of each spatial domain beam based on Table 36, and determines overhead bit widths of all transmission points/transmission point groups.

Method 1: $O_1O_2$ block and the L beams in the block are selected separately, as shown in Table 36.

Table 36

| $i_{1,1,i}$ | $i_{1,2,i}$ |
|---|---|
| $\lceil \log_2(O_1 O_2) \rceil$ | $\left\lceil \log_2 \binom{N_1 N_2}{Xi} \right\rceil$ |

Method 2: all transmission points/groups report one $O_1O_2$ block, and the L beams in the block are selected separately, as shown in Table 37.

Table 37

| $i_{1,i}$ | $i_{1,2,i}$ |
|---|---|
| $\lceil \log_2(O_1 O_2) \rceil$ | $\left\lceil \log_2 \binom{N_1 N_2}{Xi} \right\rceil$ |

Step 5: the terminal reports i pieces of frequency domain beam information. The base station determines an overhead bit width of each frequency domain beam based on Table 38, and determines overhead bit widths of all transmission points/transmission point groups.

Optionally, the configuration or predefined information of the base station, if the terminal reports each data transmission layer separately, as shown in Table 38.

Table 38

| $i_{1,5,i}$ | $i_{1,6,1,i}$ | $i_{1,6,2,i}$ | $i_{1,6,3,i}$ | $i_{1,6,4,i}$ |
|---|---|---|---|---|
| $\lceil \log_2(2M_i) \rceil$ <br><br> or N/A($N_3<19$) | $\left\lceil \log_2 \binom{N_3 - 1}{M_i - 1} \right\rceil$ | $\left\lceil \log_2 \binom{N_3 - 1}{M_i - 1} \right\rceil$ | $\left\lceil \log_2 \binom{N_3 - 1}{M_i - 1} \right\rceil$ | $\left\lceil \log_2 \binom{N_3 - 1}{M_i - 1} \right\rceil$ |

In case that the terminal can perform unified joint reporting for all data transmission layers, it is as shown in Table 39.

Table 39

| $i_{1,5,i}$ | $i_{1,6,i}$ |
|---|---|
| $\lceil \log_2(2M_i) \rceil$ or N/A($N_3$<19) | $\left\lceil \log_2 \binom{N_3-1}{M_i-1} \right\rceil$ |

Allocation method is reported as follows.

Optionally, in addition to reporting the frequency domain recommendation basis vector information, the terminal may add frequency domain recommendation basis vector allocation results of all transmission points/transmission point groups in field1 in the PMI reporting.

Optionally, in addition to reporting the spatial domain recommendation beam information, the terminal may add frequency domain recommendation basis vector quantity allocation results of all transmission points/transmission point groups in part1 in the CSI reporting.

Optionally, the terminal may also report the offset value $i_{1,8}$ of frequency domain basis vector of different transmission points/transmission point groups.

Step 6: the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

Optionally, the reported frequency domain basis vector information may be reported separately for each data transmission layer, or may be reported uniformly and jointly for all data transmission layers.

Step 6-1: the terminal reports recommended reporting non-zero coefficients for each transmission point based on the indication of the non-zero coefficient quantity, and reports an SCI of each transmission point in the non-zero coefficients in each transmission point.

Step 6-2: the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

Step 6-3: the terminal reports the recommended reporting non-zero coefficients for each transmission point based on the indication of the non-zero coefficient quantity, and reports the SCI of the first transmission point in the non-zero coefficients in each transmission point.

Step 6-4: the terminal reports the recommended reporting non-zero coefficients for each transmission point group based on the indication of the non-zero coefficient quantity, and reports the SCI of a first transmission point in a first transmission point group in the non-zero coefficients of each transmission point group. In the transmission point group, the non-zero coefficients are jointly reported between each transmission point.

Step 7: the terminal performs differential quantization on all non-zero coefficients through the following quantization schemes based on all the determined non-zero coefficients.

For each data layer, each transmission point/transmission point group has 2*Li*Mi non-zero coefficients. Firstly, in each transmission point/transmission point group, differential quantization is performed on Li*Mi-1 non-zero coefficients in a polarization direction where an SCI of each layer is located, and differential quantization is then performed on Li*Mi non-zero coefficients in a first polarization direction, which is another polarization direction.

For each data layer, each transmission point has 2*Li*Mi non-zero coefficients. In all transmission points, differential quantization is performed on i*Li*Mi-1 non-zero coefficients in a polarization direction where an SCI of a first transmission point of each layer is located, and differential quantization is then performed on Li*Mi non-zero coefficients in a first polarization direction, which is another polarization direction.

For each data layer, each transmission point group has 2*Li*Mi non-zero coefficients. In all transmission points, differential quantization is performed on i*Li*Mi-1 non-zero coefficients in a polarization direction where an SCI of a first transmission point in a first transmission point group of each layer is located, and differential quantization is then performed on Li*Mi non-zero coefficients in a first polarization direction, which is another polarization direction.

Example 5:

Step 1: the terminal receives a CSI codebook configuration parameter. Specifically, the base station can indicate the CSI codebook configuration parameter to the terminal by system pre-definition or higher layer signaling.

A higher layer signaling method can be configured by combining multiple spatial domain beam quantities, a compression basis vector factor, and a non-zero coefficient quantity factor.

A higher layer signaling method can be configured in the signaling by combining multiple spatial domain beam quantities separately, which includes but not limited to those shown in Table 40.

Table 40

|   | L1 | L2 | L3 | L4 |
|---|---|---|---|---|
| 1 | 2 | 2 | N/A | N/A |
| 2 | 2 | 3 | N/A | N/A |
| 3 | 2 | 2 | 2 | N/A |
| 4 | 2 | 2 | 2 | 2 |
| 5 | 2 | 3 | 3 | 3 |
| ... | | ... | | |

A higher layer signaling method can be configured in the signaling by combining multiple frequency domain basis vector factors separately, which includes but not limited to those shown in Table 41.

Table 41

|   | Frequency domain basis vector factor | | | |
|---|---|---|---|---|
|   | $p_{v,1}$ | $p_{v,2}$ | $p_{v,3}$ | $p_{v,4}$ |
| 1 | 0.125 | 0.125 | N/A | N/A |
| 2 | 0.25 | 0.25 | N/A | N/A |
| 3 | 0.125 | 0.25 | 0.125 | N/A |
| 4 | 0.125 | 0.25 | 0.25 | 0.125 |
| 5 | 0.125 | 0.125 | 0.125 | 0.125 |
| ... | | | ... | |

A higher layer signaling method can be configured in the signaling by jointly combining multiple spatial domain beams/frequency domain basis vector factors, which includes but not limited to those shown in Table 42.

Table 42

|   | Spatial domain beam quantity | | | | Frequency domain basis vector factor | | | |
|---|---|---|---|---|---|---|---|---|
|   | $L_1$ | $L_2$ | $L_3$ | $L_4$ | $p_{v,1}$ | $p_{v,2}$ | $p_{v,3}$ | $p_{v,4}$ |
| 1 | 2 | 2 | N/A | N/A | 0.125 | 0.125 | N/A | N/A |
| 2 | 2 | 3 | N/A | N/A | 0.25 | 0.25 | N/A | N/A |
| 3 | 2 | 2 | 2 | N/A | 0.125 | 0.25 | 0.125 | N/A |
| 4 | 2 | 2 | 2 | 2 | 0.125 | 0.25 | 0.25 | 0.125 |
| 5 | 2 | 3 | 3 | 3 | 0.125 | 0.125 | 0.125 | 0.125 |
| ... | | | | | ... | | | |

Step 2: the terminal obtains a combined beam indication, determines an optimal spatial domain beam quantity configuration based on combined spatial domain beam configuration information, such as configuration 4 in Table 42, and determines the spatial domain beam quantity 2 of each transmission point/transmission point group, where i is a quantity of all transmission points/transmission point groups in multi-point coordination. Selecting an optimal configuration in Table 42 also implicitly selecting a recommended quantity of transmission points i.

Method 1: the quantity i of all transmission points/transmission point groups that can be reported for CSI is configured based on higher layer signaling or predefined ways.

Method 2: the quantity i of all transmission points/transmission point groups that can be reported for CSI is implicitly determined based on a quantity of CSI resources or port groups.

Method 3: the terminal calculates the quantity i of all transmission points/transmission point groups reported from the current CSI by itself based on a maximum quantity j of all transmission points/transmission point groups configured by the base station.

Step 3: the terminal reports i pieces of spatial domain beam information, and the base station determines an overhead bit width of each spatial domain beam based on Table 43, and determines overhead bit widths of all transmission points/transmission point groups.

Optionally, in addition to reporting the spatial domain recommendation beam information, the terminal may add additional combination information $i_{1,3}$ of the spatial domain configuration information of all transmission points/transmission point groups in field1 in the PMI reporting, as shown in Table 43.

Table 43

| $i_{1,1,i}$ | $i_{1,2,i}$ | $i_{1,3}$ |
|---|---|---|
| $\lceil \log_2(O_1 O_2) \rceil$ | $\left\lceil \log_2 \binom{N_1 N_2}{L_i} \right\rceil$ | $\lceil \log_2 combiantion \rceil$ |

Optionally, in addition to reporting the spatial domain recommendation beam information, the terminal may add an additional combination result of the spatial domain configuration information of all transmission points/transmission point groups in part1 in the CSI reporting, as shown in Table 44.

Table 44

| CSI part1 | |
|---|---|
| RI (if reported) CQI KNZ | Additional combination result of the spatial domain configuration information of all transmission points/transmission point groups |
| | $\lceil \log_2 combiantion \rceil$ |

Optionally, the additional combination indication information of the frequency domain configuration information of all transmission points/transmission point groups can be configured by a predefined way, higher layer signaling, or dynamic DCI indication signaling.

Optionally, the terminal may determine multiple candidate $L_j$ allocation ways through the additional combination indication information, and recommend to report a kind of additional combination information $i_{1,3}$ of the frequency domain configuration information of all transmission points/transmission point groups based on a current measurement quantity i.

Optionally, in addition to reporting the frequency domain recommendation basis vector information, the terminal may add additional combination information $i_{1,8}$ of the frequency domain configuration information of all transmission points/transmission point groups in field1 in the PMI reporting.

Optionally, configuration or predefined information of the base station, in case that the terminal reports separately for each data transmission layer, is as shown in Table 45.

Table 45

| $i_{1,5,i}$ | $i_{1,6,1,i}$ | $i_{1,6,2,i}$ | $i_{1,6,3,i}$ | $i_{1,6,4,i}$ | $i_{1,8,i}$ |
|---|---|---|---|---|---|
| $\left\lceil \log_2 \binom{2M}{i} \right\rceil$ or N/A($N_3$<19) | $\left\lceil \log_2 \binom{N_3 - 1}{\frac{M}{i} - 1} \right\rceil$ | $\left\lceil \log_2 \binom{N_3 - 1}{\frac{M}{i} - 1} \right\rceil$ | $\left\lceil \log_2 \binom{N_3 - 1}{\frac{M}{i} - 1} \right\rceil$ | $\left\lceil \log_2 \binom{N_3 - 1}{\frac{M}{i} - 1} \right\rceil$ | Additional combination result of the frequency domain configuration information of each transmission point/transmission point group $\lceil \log_2 combiantion \rceil$ |

In case that the terminal can perform unified joint reporting for all data transmission layers, it is as shown in Table 46.

Table 46

| $i_{1,5,i}$ $\left\lceil \log_2\left(\frac{2M}{i}\right) \right\rceil$ or N/A($N_3$<19) | $i_{1,6,i}$ $\left\lceil \log_2\left(\frac{N_3-1}{\frac{M}{i}-1}\right) \right\rceil$ | $i_{1,8,i}$ Additional combination result of the frequency domain configuration information of each transmission point/transmission point group $$\lceil \log_2 combiantion \rceil$$ |
|---|---|---|

Optionally, in addition to reporting the frequency domain recommendation basis vector information, the terminal may add an additional combination result of the frequency domain configuration information of all transmission points/transmission point groups in part1 in the CSI reporting, as shown in Table 47.

Table 47

| CSI part1 | |
|---|---|
| RI (if reported) CQI | Additional combination result of the frequency domain configuration information of all transmission points/transmission point groups |
| KNZ | $i * \lceil \log_2 combiantion \rceil$ |

Optionally, the terminal may also report the offset value $i_{1,8}$ of frequency domain basis vector of different transmission points/transmission point groups.

Step 6: the terminal may report a multi-point joint strongest coefficient index based on a CJT assumption through the following ways based on the indication of the non-zero coefficient quantity in the initial codebook parameter configuration information predefined by the system or configured by the base station, and the determined frequency domain basis vector information of all transmission points/transmission point groups.

Optionally, the reported frequency domain basis vector information may be reported separately for each data transmission layer, or may be reported uniformly and jointly for all data transmission layers.

Step 6-1: the terminal reports recommended reporting non-zero coefficients for each transmission point based on the indication of the non-zero coefficient quantity, and reports an SCI of each transmission point in the non-zero coefficients in each transmission point.

Step 6-2: the terminal reports the recommended reporting non-zero coefficients for each transmission point group based on the indication of the non-zero coefficient quantity, and reports the SCI of each transmission point group in the non-zero coefficients of each transmission point group. In the transmission point group, the non-zero coefficients are jointly reported between each transmission point, and one SCI is reported.

Step 6-3: the terminal reports the recommended reporting non-zero coefficients for each transmission point based on the indication of the non-zero coefficient quantity, and reports the SCI of the first transmission point in the non-zero coefficients in each transmission point.

Step 6-4: the terminal reports the recommended reporting non-zero coefficients for each transmission point group based on the indication of the non-zero coefficient quantity, and reports the SCI of a first transmission point in a first transmission point group in the non-zero coefficients of each transmission point group. In the transmission point group, the non-zero coefficients are jointly reported between each transmission point.

Step 7: the terminal performs differential quantization on all non-zero coefficients through the following quantization schemes based on all the determined non-zero coefficients.

For each data layer, each transmission point/transmission point group has 2*Li*Mi non-zero coefficients. Firstly, in each transmission point/transmission point group, differential quantization is performed on Li*Mi-1 non-zero coefficients in a polarization direction where an SCI of each layer is located, and differential quantization is then performed on Li*Mi non-zero coefficients in a first polarization direction, which is another polarization direction.

For each data layer, each transmission point has 2*Li*Mi non-zero coefficients. In all transmission points, differential quantization is performed on i*Li*Mi-1 non-zero coefficients in a polarization direction where an SCI of a first transmission point of each layer is located, and differential quantization is then performed on Li*Mi non-zero coefficients in a first polarization direction, which is another polarization direction.

For each data layer, each transmission point group has 2*Li*Mi non-zero coefficients. In all transmission points, differential quantization is performed on i*Li*Mi-1 non-zero coefficients in a polarization direction where an SCI of a first transmission point in a first transmission point group of each layer is located, and differential quantization is then performed on Li*Mi non-zero coefficients in a first polarization direction, which is another polarization direction.

Optionally, in case that the frequency domain basis vectors and non-zero coefficients are reported jointly by all layers, the above scheme performs joint differential for all layers, that is, on 2* Li*Mi non-zero coefficients.

In the embodiments of the present application, a joint codebook parameter is reported under an assumption of a coordinated multi-point transmission scheme, reliability of the system is improved, and a certain feedback overhead is ensured.

FIG. 3 is a schematic structural diagram of a terminal according to an embodiment of the present application. As shown in FIG. 3, the terminal includes a memory 320, a transceiver 300, and a processor 310,

where the memory 320 is used to store a computer program, the transceiver 300 is used to receive and transmit data under control of the processor 310, and the processor 310 is used to read the computer program in the memory 320 and perform the following operations:

determining initial codebook parameter configuration information;

determining a codebook parameter in a multi-point coherent joint transmission way based on the initial codebook parameter configuration information; and

reporting the codebook parameter in the multi-point coherent joint transmission way.

Specifically, the transceiver 300 is used for receiving and transmitting data under the control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. A bus interface provides an interface. The transceiver 300 may include multiple elements, i.e., including a transmitter and a receiver, units for providing communication with various other devices over transmission media including wireless channels, wired channels, fiber optic cables, and the like. For different user devices, a user interface 330 may also be an interface capable of externally or internally connecting required devices, and the connected devices include but are not limited to a small keypad, a display, a speaker, a microphone, a joystick, and the like.

The processor 310 is responsible for managing the bus architecture and general processing, and the memory 320 may store data used by the processor 310 when performing operations.

In some embodiments, the processor 310 may be a central processing unit (CPU), an application specific integrated circuit (ASIC), a field programmable gate array (FPGA), or a complex programmable logic device (CPLD), and the processor 310 may also adopt a multi-core architecture.

The processor calls a computer program stored in the memory to perform any methods provided by the embodiments of the present application based on the obtained executable instructions. The processor 310 and the memory 320 can also be arranged physically separately.

In some embodiments, the initial codebook parameter configuration information is predefined or configured by a network device.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, where the first index is used to indicate the multiple spatial domain beam quantities.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X; or

determining each spatial domain beam quantity in the multiple spatial domain beam quantities, where each spatial domain beam quantity is X/I, and I is a quantity of the multiple spatial domain beam quantities; or

determining an i-th spatial domain beam quantity, where the i-th spatial domain beam quantity is $L_i$, $\sum_{i=1}^{I} L_i = X$, and I is a quantity of the multiple spatial domain beam quantities.

In some embodiments, determining the i-th spatial domain beam quantity includes:
determining the i-th spatial domain beam quantity based on i-th channel estimation information.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, where the second index is used to indicate the multiple frequency domain basis vector quantities.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is Y*N3/R, N3 is a subband size of a current precoder matrix indicator (PMI), and R is a subband factor; or

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities; or

determining an i-th frequency domain basis vector quantity, where the i-th frequency domain basis vector quantity is $M_i$, $\sum_{i=1}^{I} M_i = Y$, and I is a quantity of the multiple frequency domain basis vector quantities.

In some embodiments, reporting the codebook parameter in the multi-point coherent joint transmission way includes:

reporting one frequency domain basis vector; or

reporting multiple frequency domain basis vectors.

In some embodiments, in case that the initial codebook parameter configuration information is an indication of a non-zero coefficient quantity, determining the codebook parameter in the multi-point coherent joint transmission way based on the initial codebook parameter configuration information includes:

determining multiple non-zero coefficient quantities in the multi-point coherent joint transmission way based on the indication of the non-zero coefficient quantity.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

In some embodiments, the processor is further used to read the computer program in the memory and perform the following operation:

performing differential quantization on the non-zero coefficients.

It should be noted that the terminal provided by the embodiments of the present application can implement all the method steps in the method embodiments performed by the terminal and may achieve the same technical effect. The parts and beneficial effects of this embodiment that are the same as those of the method embodiments are not described in detail.

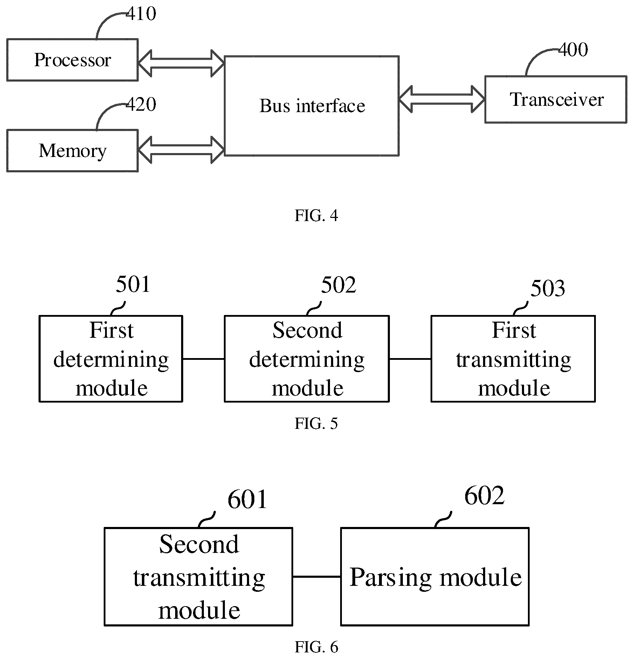

FIG. 4 is a schematic structural diagram of a network device according to an embodiment of the present application. As shown in FIG. 4, the network device includes a memory 420, a transceiver 400 and a processor 410, where the memory 420 is used to store a computer program, the transceiver 400 is used to receive and transmit data under control of the processor 410, and the processor 410 is used to read the computer program in the memory 420 and perform the following operations:

receiving a codebook parameter reported from a terminal; and

parsing the codebook parameter based on initial codebook parameter configuration information.

Specifically, the transceiver 400 is used for receiving and transmitting data under the control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. A bus interface provides an interface. The transceiver 400 may include multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field programmable gate array (FPGA) or a complex programmable logic device (CPLD), and the processor 410 may also adopt a multi-core architecture.

In some embodiments, the initial codebook parameter configuration information is predefined or configured by the network device.

In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

Specifically, the network device provided by the embodiments of the present application can implement all the method steps in the method embodiments performed by the network device and may achieve the same technical effect. The parts and beneficial effects of this embodiment that are the same as those of the method embodiments are not described in detail.

FIG. 5 is a first schematic structural diagram of an apparatus for codebook parameter transmission according to an embodiment of the present application. As shown in FIG. 5, an embodiment of the present application provides an apparatus for codebook parameter transmission, including a first determining module 501, a second determining module 502 and a first transmitting module 503.

The first determining module 501 is used for determining initial codebook parameter configuration information.

The second determining module 502 is used for determining a codebook parameter in a multi-point coherent joint transmission way based on the initial codebook parameter configuration information.

The first transmitting module 503 is used for reporting the codebook parameter in the multi-point coherent joint transmission way.

In some embodiments, the initial codebook parameter configuration information is predefined or configured by a network device.

In some embodiments, in case that the initial codebook parameter configuration information is a spatial domain beam quantity, determining the codebook parameter in the multi-point coherent joint transmission way based on the initial codebook parameter configuration information includes:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, where an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, where the first index is used to indicate the multiple spatial domain beam quantities.

In some embodiments, determining the multiple spatial domain beam quantities in the multi-point coherent joint transmission way based on the single spatial domain beam quantity X includes:

determining each spatial domain beam quantity in the multiple spatial domain beam quantities, where each spatial domain beam quantity is X; or

determining each spatial domain beam quantity in the multiple spatial domain beam quantities, where each spatial domain beam quantity is X/I, and I is a quantity of the multiple spatial domain beam quantities; or

determining an i-th spatial domain beam quantity, where the i-th spatial domain beam quantity is $L_i$, $\sum_{i=1}^{I} L_i = X$, and I is a quantity of the multiple spatial domain beam quantities.

In some embodiments, determining the i-th spatial domain beam quantity includes:
determining the i-th spatial domain beam quantity based on i-th channel estimation information.

In some embodiments, in case that the initial codebook parameter configuration information is a frequency domain basis vector quantity, determining the codebook parameter in the multi-point coherent joint transmission way based on the initial codebook parameter configuration information includes:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, where an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, where the second index is used to indicate the multiple frequency domain basis vector quantities.

In some embodiments, determining the multiple frequency domain basis vector quantities in the multi-point coherent joint transmission way based on the single frequency domain basis vector quantity Y includes:

determining each frequency domain basis vector quantity in the multiple frequency domain basis vector quantities, where each frequency domain basis vector quantity is Y*N3/R, N3 is a subband size of a current precoder matrix indicator (PMI), and R is a subband factor; or

determining each frequency domain basis vector quantity in the multiple frequency domain basis vector quantities, where each frequency domain basis vector quantity is (Y*N3)/(R*I), N3 is a subband size of a current precoder matrix indicator (PMI), R is a subband factor, and I is a quantity of the multiple frequency domain basis vector quantities; or

determining an i-th frequency domain basis vector quantity, where the i-th frequency domain basis vector quantity is $M_i$, $\sum_{i=1}^{I} M_i = Y$, and I is a quantity of the multiple frequency domain basis vector quantities.

In some embodiments, reporting the codebook parameter in the multi-point coherent joint transmission way includes:

reporting one frequency domain basis vector; or
reporting multiple frequency domain basis vectors.

In some embodiments, in case that the initial codebook parameter configuration information is an indication of a non-zero coefficient quantity, determining the codebook parameter in the multi-point coherent joint transmission way based on the initial codebook parameter configuration information includes:
determining multiple non-zero coefficient quantities in the multi-point coherent joint transmission way based on the indication of the non-zero coefficient quantity.

In some embodiments, reporting the codebook parameter in the multi-point coherent joint transmission way includes:

reporting multiple non-zero coefficients and multiple strongest coefficient indexes; or

reporting multiple non-zero coefficients, and reporting one strongest coefficient index.

In some embodiments, the apparatus further includes a quantizing module,

where the quantizing module is used for performing differential quantization on the non-zero coefficients.

Specifically, the apparatus for codebook parameter transmission provided by the embodiments of the present application can implement all the method steps in the method embodiments performed by a terminal and may achieve the same technical effect. The parts and beneficial effects of this embodiment that are the same as those of the method embodiments are not described in detail.

FIG. 6 is a second schematic structural diagram of an apparatus for codebook parameter transmission according to an embodiment of the present application. As shown in FIG. 6, an embodiment of the present application provides an apparatus for codebook parameter transmission, including a second transmitting module 601 and a parsing module 602.

The second transmitting module 601 is used for receiving a codebook parameter reported from a terminal.

The parsing module 602 is used for parsing the codebook parameter based on initial codebook parameter configuration information.

In some embodiments, the initial codebook parameter configuration information is predefined or configured by a network device.

In some embodiments, the initial codebook parameter configuration information includes one or more of the following information:

a spatial domain beam quantity;

a frequency domain basis vector quantity; or

an indication of a non-zero coefficient quantity.

In some embodiments, the spatial domain beam quantity includes one or more of the following:

a single spatial domain beam quantity;

multiple spatial domain beam quantities; or

a first index, where the first index is used to indicate multiple spatial domain beam quantities.

In some embodiments, the frequency domain basis vector quantity includes one or more of the following:

a single frequency domain basis vector quantity;

multiple frequency domain basis vector quantities; or

a second index, where the second index is used to indicate multiple frequency domain basis vector quantities.

In some embodiments, parsing the codebook parameter based on the initial codebook parameter configuration information includes:

determining a bit width of each codebook parameter based on the initial codebook parameter configuration information; and

parsing the codebook parameters based on the bit width.

Specifically, the apparatus for codebook parameter transmission provided by the embodiments of the present application can implement all the method steps in the method embodiments performed by a network device and may achieve the same technical effect. The parts and beneficial effects of this embodiment that are the same as those of the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a computer-readable storage medium, which stores a computer program, and the computer program is used to cause a computer to perform the methods for codebook parameter transmission provided by the above-mentioned method embodiments.

Specifically, the computer-readable storage medium provided by the embodiment of the present application can implement all the method steps in the above method embodiments and may achieve the same technical effect. The parts and beneficial effects of this embodiment that are the same as those of the method embodiments are not described in detail.

It should be noted that: the processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

It should also be noted that: the terms "first", "second", etc. in the description and claims of the present application are used to distinguish similar objects, and are not used to describe a specific order or sequence. It should be understood that the terms used in this mode may be interchangeable where appropriate, so that the embodiments of the present application can be implemented in an order other than those illustrated or described here, and the objects distinguished by "first" and "second" are generally of the same type, and the quantity of objects is not limited, for example, the first object can be one or more.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

The solutions provided by the embodiments of the present application may be applied to a variety of systems, especially 5G systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

"Determining B based on A" in the present application means that the factor A should be considered when determining B. It is not limited to "B can be determined only based on A", but should also include: "determining B based on A and C", "determining B based on A, C and E", "determining C based on A, and further determining B based on C", etc. It can also include taking A as a condition for determining B, for example, "in case that A meets a first condition, using a first method to determine B"; for example, "in case that A meets a second condition, determining B", etc.; for example, "in case that A meets a third condition, determining B based on a first parameter", etc. It can also be a condition that A is taken as a factor for determining B, for example, "in case that A meets a first condition, using the first method to determine C, and further determining B based on C", etc.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for codebook parameter transmission, performed by a terminal, comprising:

    determining initial codebook parameter configuration information;
    determining a codebook parameter in a multi-point coherent joint transmission way based on the initial codebook parameter configuration information; and
    reporting the codebook parameter in the multi-point coherent joint transmission way.

2. The method of claim 1, wherein the initial codebook parameter configuration information is predefined or configured by a network device.

3. The method of claim 1 or 2, wherein in case that the initial codebook parameter configuration information is a spatial domain beam quantity, determining the codebook parameter in the multi-point coherent joint transmission way based on the initial codebook parameter configuration information comprises:

in case that the initial codebook parameter configuration information is a single spatial domain beam quantity X, determining multiple spatial domain beam quantities in the multi-point coherent joint transmission way based on the single spatial domain beam quantity X; or

in case that the initial codebook parameter configuration information is multiple spatial domain beam quantities, determining multiple spatial domain beam quantities in the multi-point coherent joint transmission way based on the multiple spatial domain beam quantities, wherein an i-th spatial domain beam quantity is $L_i$, $L_i = X_i$, and $X_i$ is an i-th spatial domain beam quantity in the initial codebook parameter configuration information; or

in case that the initial codebook parameter configuration information is a first index, determining multiple spatial domain beam quantities in the multi-point coherent joint transmission way based on the first index, wherein the first index is used to indicate the multiple spatial domain beam quantities.

4. The method of claim 3, wherein determining the multiple spatial domain beam quantities in the multi-point coherent joint transmission way based on the single spatial domain beam quantity X comprises:

determining each spatial domain beam quantity in the multiple spatial domain beam quantities, wherein each spatial domain beam quantity is X; or

determining each spatial domain beam quantity in the multiple spatial domain beam quantities, wherein each spatial domain beam quantity is X/I, and I is a quantity of the multiple spatial domain beam quantities; or

determining an i-th spatial domain beam quantity, wherein the i-th spatial domain beam quantity is $L_i$,

$$\sum_{i=1}^{I} L_i = X$$, and I is a quantity of the multiple spatial domain beam quantities.

5. The method of claim 4, wherein determining the i-th spatial domain beam quantity comprises:
determining the i-th spatial domain beam quantity based on i-th channel estimation information.

6. The method of claim 1 or 2, wherein in case that the initial codebook parameter configuration information is a frequency domain basis vector quantity, determining the codebook parameter in the multi-point coherent joint transmission way based on the initial codebook parameter configuration information comprises:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, wherein an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, wherein the second index is used to indicate the multiple frequency domain basis vector quantities.

7. The method of claim 6, wherein determining the multiple frequency domain basis vector quantities in the multi-point coherent joint transmission way based on the single frequency domain basis vector quantity Y comprises:

determining each frequency domain basis vector quantity in the multiple frequency domain basis vector quantities, wherein each frequency domain basis vector quantity is Y*N3/R, N3 is a subband size of a current precoder matrix indicator, PMI, and R is a subband factor; or

determining each frequency domain basis vector quantity in the multiple frequency domain basis vector quantities, wherein each frequency domain basis vector quantity is (Y*N3)/(R*I), N3 is a subband size of a current precoder matrix indicator, PMI, R is a subband factor, and I is a quantity of the multiple frequency domain basis vector quantities; or

determining an i-th frequency domain basis vector quantity, wherein the i-th frequency domain basis vector

quantity is $M_i$, $\sum_{i=1}^{I} M_i = Y$ , and I is a quantity of the multiple frequency domain basis vector quantities.

8. The method of claim 7, wherein reporting the codebook parameter in the multi-point coherent joint transmission way comprises:

   reporting one frequency domain basis vector; or
   reporting multiple frequency domain basis vectors.

9. The method of claim 1 or 2, wherein in case that the initial codebook parameter configuration information is an indication of a non-zero coefficient quantity, determining the codebook parameter in the multi-point coherent joint transmission way based on the initial codebook parameter configuration information comprises:
   determining multiple non-zero coefficient quantities in the multi-point coherent joint transmission way based on the indication of the non-zero coefficient quantity.

10. The method of claim 9, wherein reporting the codebook parameter in the multi-point coherent joint transmission way comprises:

   reporting multiple non-zero coefficients and multiple strongest coefficient indexes; or
   reporting multiple non-zero coefficients, and reporting one strongest coefficient index.

11. The method of claim 10, further comprising:
   performing differential quantization on the non-zero coefficients.

12. A method for codebook parameter transmission, performed by a network device, comprising:

   receiving a codebook parameter reported from a terminal; and
   parsing the codebook parameter based on initial codebook parameter configuration information.

13. The method of claim 12, wherein the initial codebook parameter configuration information is predefined or configured by the network device.

14. The method of claim 12, wherein the initial codebook parameter configuration information comprises one or more of the following information:

   a spatial domain beam quantity;
   a frequency domain basis vector quantity; or
   an indication of a non-zero coefficient quantity.

15. The method of claim 14, wherein the spatial domain beam quantity comprises one or more of the following:

   a single spatial domain beam quantity;
   multiple spatial domain beam quantities; or
   a first index, wherein the first index is used to indicate multiple spatial domain beam quantities.

16. The method of claim 14, wherein the frequency domain basis vector quantity comprises one or more of the following:

   a single frequency domain basis vector quantity;
   multiple frequency domain basis vector quantities; or
   a second index, wherein the second index is used to indicate multiple frequency domain basis vector quantities.

17. The method of any one of claims 12 to 16, wherein parsing the codebook parameter based on the initial codebook parameter configuration information comprises:

   determining a bit width of each codebook parameter based on the initial codebook parameter configuration information; and
   parsing the codebook parameters based on the bit width.

18. A terminal, comprising a memory, a transceiver and a processor,
wherein the memory is used to store a computer program, the transceiver is used to receive and transmit data under control of the processor, and the processor is used to read the computer program in the memory and perform the following operations:

determining initial codebook parameter configuration information;
determining a codebook parameter in a multi-point coherent joint transmission way based on the initial codebook parameter configuration information; and
reporting the codebook parameter in the multi-point coherent joint transmission way.

19. The terminal of claim 18, wherein the initial codebook parameter configuration information is predefined or configured by a network device.

20. The terminal of claim 18 or 19, wherein in case that the initial codebook parameter configuration information is a spatial domain beam quantity, determining the codebook parameter in the multi-point coherent joint transmission way based on the initial codebook parameter configuration information comprises:

in case that the initial codebook parameter configuration information is a single spatial domain beam quantity X, determining multiple spatial domain beam quantities in the multi-point coherent joint transmission way based on the single spatial domain beam quantity X; or
in case that the initial codebook parameter configuration information is multiple spatial domain beam quantities, determining multiple spatial domain beam quantities in the multi-point coherent joint transmission way based on the multiple spatial domain beam quantities, wherein an i-th spatial domain beam quantity is $L_i$, $L_i = X_i$, and $X_i$ is an i-th spatial domain beam quantity in the initial codebook parameter configuration information; or
in case that the initial codebook parameter configuration information is a first index, determining multiple spatial domain beam quantities in the multi-point coherent joint transmission way based on the first index, wherein the first index is used to indicate the multiple spatial domain beam quantities.

21. The terminal of claim 20, wherein determining the multiple spatial domain beam quantities in the multi-point coherent joint transmission way based on the single spatial domain beam quantity X comprises:

determining each spatial domain beam quantity in the multiple spatial domain beam quantities, wherein each spatial domain beam quantity is X; or
determining each spatial domain beam quantity in the multiple spatial domain beam quantities, wherein each spatial domain beam quantity is X/I, and I is a quantity of the multiple spatial domain beam quantities; or
determining an i-th spatial domain beam quantity, wherein the i-th spatial domain beam quantity is $L_i$,
$$\sum_{i=1}^{I} L_i = X$$, and I is a quantity of the multiple spatial domain beam quantities.

22. The terminal of claim 21, wherein determining the i-th spatial domain beam quantity comprises:
determining the i-th spatial domain beam quantity based on i-th channel estimation information.

23. The terminal of claim 18 or 19, wherein in case that the initial codebook parameter configuration information is a frequency domain basis vector quantity, determining the codebook parameter in the multi-point coherent joint transmission way based on the initial codebook parameter configuration information comprises:

in case that the initial codebook parameter configuration information is a single frequency domain basis vector quantity Y, determining multiple frequency domain basis vector quantities in the multi-point coherent joint transmission way based on the single frequency domain basis vector quantity Y; or
in case that the initial codebook parameter configuration information is multiple frequency domain basis vector quantities, determining multiple frequency domain basis vector quantities in the multi-point coherent joint transmission way based on the multiple frequency domain basis vector quantities, wherein an i-th frequency domain basis vector quantity is $M_i$, $M_i = Y_i$, and $Y_i$ is an i-th frequency domain basis vector quantity in the initial codebook parameter configuration information; or
in case that the initial codebook parameter configuration information is a second index, determining multiple frequency domain basis vector quantities in the multi-point coherent joint transmission way based on the second index, wherein the second index is used to indicate the multiple frequency domain basis vector quantities.

24. The terminal of claim 23, wherein determining the multiple frequency domain basis vector quantities in the multi-point coherent joint transmission way based on the single frequency domain basis vector quantity Y comprises:

determining each frequency domain basis vector quantity in the multiple frequency domain basis vector quantities, wherein each frequency domain basis vector quantity is Y*N3/R, N3 is a subband size of a current precoder matrix indicator, PMI, and R is a subband factor; or
determining each frequency domain basis vector quantity in the multiple frequency domain basis vector quantities, wherein each frequency domain basis vector quantity is (Y*N3)/(R*I), N3 is a subband size of a current precoder matrix indicator, PMI, R is a subband factor, and I is a quantity of the multiple frequency domain basis vector quantities; or
determining an i-th frequency domain basis vector quantity, wherein the i-th frequency domain basis vector quantity is $M_i$, $\sum_{i=1}^{I} M_i = Y$ , and I is a quantity of the multiple frequency domain basis vector quantities.

25. The terminal of claim 24, wherein reporting the codebook parameter in the multi-point coherent joint transmission way comprises:

reporting one frequency domain basis vector; or
reporting multiple frequency domain basis vectors.

26. The terminal of claim 18 or 19, wherein in case that the initial codebook parameter configuration information is an indication of a non-zero coefficient quantity, determining the codebook parameter in the multi-point coherent joint transmission way based on the initial codebook parameter configuration information comprises:
determining multiple non-zero coefficient quantities in the multi-point coherent joint transmission way based on the indication of the non-zero coefficient quantity.

27. The terminal of claim 26, wherein reporting the codebook parameter in the multi-point coherent joint transmission way comprises:

reporting multiple non-zero coefficients and multiple strongest coefficient indexes; or
reporting multiple non-zero coefficients, and reporting one strongest coefficient index.

28. The terminal of claim 27, wherein the processor is further used to read the computer program in the memory and perform the following operation:
performing differential quantization on the non-zero coefficients.

29. A network device, comprising a memory, a transceiver and a processor,
wherein the memory is used to store a computer program, the transceiver is used to receive and transmit data under control of the processor, and the processor is used to read the computer program in the memory and perform the following operations:

receiving a codebook parameter reported from a terminal; and
parsing the codebook parameter based on initial codebook parameter configuration information.

30. The network device of claim 29, wherein the initial codebook parameter configuration information is predefined or configured by the network device.

31. The network device of claim 29, wherein the initial codebook parameter configuration information comprises one or more of the following information:

a spatial domain beam quantity;
a frequency domain basis vector quantity; or
an indication of a non-zero coefficient quantity.

32. The network device of claim 31, wherein the spatial domain beam quantity comprises one or more of the following:

a single spatial domain beam quantity;
multiple spatial domain beam quantities; or

a first index, wherein the first index is used to indicate multiple spatial domain beam quantities.

33. The network device of claim 31, wherein the frequency domain basis vector quantity comprises one or more of the following:

a single frequency domain basis vector quantity;
multiple frequency domain basis vector quantities; or
a second index, wherein the second index is used to indicate multiple frequency domain basis vector quantities.

34. The network device of any one of claims 29 to 33, wherein parsing the codebook parameter based on the initial codebook parameter configuration information comprises:

determining a bit width of each codebook parameter based on the initial codebook parameter configuration information; and
parsing the codebook parameters based on the bit width.

35. An apparatus for codebook parameter transmission, comprising:

a first determining module, used for determining initial codebook parameter configuration information;
a second determining module, used for determining a codebook parameter in a multi-point coherent joint transmission way based on the initial codebook parameter configuration information; and
a first transmitting module, used for reporting the codebook parameter in the multi-point coherent joint transmission way.

36. The apparatus of claim 35, wherein the initial codebook parameter configuration information is predefined or configured by a network device.

37. The apparatus of claim 35 or 36, wherein in case that the initial codebook parameter configuration information is a spatial domain beam quantity, determining the codebook parameter in the multi-point coherent joint transmission way based on the initial codebook parameter configuration information comprises:

in case that the initial codebook parameter configuration information is a single spatial domain beam quantity X, determining multiple spatial domain beam quantities in the multi-point coherent joint transmission way based on the single spatial domain beam quantity X; or
in case that the initial codebook parameter configuration information is multiple spatial domain beam quantities, determining multiple spatial domain beam quantities in the multi-point coherent joint transmission way based on the multiple spatial domain beam quantities, wherein an i-th spatial domain beam quantity is $L_i$, $L_i = X_i$, and $X_i$ is an i-th spatial domain beam quantity in the initial codebook parameter configuration information; or
in case that the initial codebook parameter configuration information is a first index, determining multiple spatial domain beam quantities in the multi-point coherent joint transmission way based on the first index, wherein the first index is used to indicate the multiple spatial domain beam quantities.

38. The apparatus of claim 37, wherein determining the multiple spatial domain beam quantities in the multi-point coherent joint transmission way based on the single spatial domain beam quantity X comprises:

determining each spatial domain beam quantity in the multiple spatial domain beam quantities, wherein each spatial domain beam quantity is X; or
determining each spatial domain beam quantity in the multiple spatial domain beam quantities, wherein each spatial domain beam quantity is X/I, and I is a quantity of the multiple spatial domain beam quantities; or
determining an i-th spatial domain beam quantity, wherein the i-th spatial domain beam quantity is $L_i$,

$$\sum_{i=1}^{I} L_i = X$$, and I is a quantity of the multiple spatial domain beam quantities.

39. The apparatus of claim 38, wherein determining the i-th spatial domain beam quantity comprises:
determining the i-th spatial domain beam quantity based on i-th channel estimation information.

40. The apparatus of claim 35 or 36, wherein in case that the initial codebook parameter configuration information is a frequency domain basis vector quantity, determining the codebook parameter in the multi-point coherent joint transmission way based on the initial codebook parameter configuration information comprises:

in case that the initial codebook parameter configuration information is a single frequency domain basis vector quantity Y, determining multiple frequency domain basis vector quantities in the multi-point coherent joint transmission way based on the single frequency domain basis vector quantity Y; or

in case that the initial codebook parameter configuration information is multiple frequency domain basis vector quantities, determining multiple frequency domain basis vector quantities in the multi-point coherent joint transmission way based on the multiple frequency domain basis vector quantities, wherein an i-th frequency domain basis vector quantity is $M_i$, $M_i = Y_i$, and $Y_i$ is an i-th frequency domain basis vector quantity in the initial codebook parameter configuration information; or

in case that the initial codebook parameter configuration information is a second index, determining multiple frequency domain basis vector quantities in the multi-point coherent joint transmission way based on the second index, wherein the second index is used to indicate the multiple frequency domain basis vector quantities.

41. The apparatus of claim 40, wherein determining the multiple frequency domain basis vector quantities in the multi-point coherent joint transmission way based on the single frequency domain basis vector quantity Y comprises:

determining each frequency domain basis vector quantity in the multiple frequency domain basis vector quantities, wherein each frequency domain basis vector quantity is Y*N3/R, N3 is a subband size of a current precoder matrix indicator, PMI, and R is a subband factor; or

determining each frequency domain basis vector quantity in the multiple frequency domain basis vector quantities, wherein each frequency domain basis vector quantity is (Y*N3)/(R*I), N3 is a subband size of a current precoder matrix indicator, PMI, R is a subband factor, and I is a quantity of the multiple frequency domain basis vector quantities; or

determining an i-th frequency domain basis vector quantity, wherein the i-th frequency domain basis vector quantity is $M_i$, $\sum_{i=1}^{I} M_i = Y$, and I is a quantity of the multiple frequency domain basis vector quantities.

42. The apparatus of claim 41, wherein reporting the codebook parameter in the multi-point coherent joint transmission way comprises:

reporting one frequency domain basis vector; or
reporting multiple frequency domain basis vectors.

43. The apparatus of claim 35 or 36, wherein in case that the initial codebook parameter configuration information is an indication of a non-zero coefficient quantity, determining the codebook parameter in the multi-point coherent joint transmission way based on the initial codebook parameter configuration information comprises:
determining multiple non-zero coefficient quantities in the multi-point coherent joint transmission way based on the indication of the non-zero coefficient quantity.

44. The apparatus of claim 43, wherein reporting the codebook parameter in the multi-point coherent joint transmission way comprises:

reporting multiple non-zero coefficients and multiple strongest coefficient indexes; or
reporting multiple non-zero coefficients, and reporting one strongest coefficient index.

45. The apparatus of claim 44, further comprises a quantizing module,
wherein the quantizing module is used for performing differential quantization on the non-zero coefficients.

46. An apparatus for codebook parameter transmission, comprising:

a second transmitting module, used for receiving a codebook parameter reported from a terminal; and
a parsing module, used for parsing the codebook parameter based on initial codebook parameter configuration information.

47. The apparatus of claim 46, wherein the initial codebook parameter configuration information is predefined or configured by a network device.

48. The apparatus of claim 46, wherein the initial codebook parameter configuration information comprises one or more of the following information:

a spatial domain beam quantity;
a frequency domain basis vector quantity; or
an indication of a non-zero coefficient quantity.

49. The apparatus of claim 48, wherein the spatial domain beam quantity comprises one or more of the following:

a single spatial domain beam quantity;
multiple spatial domain beam quantities; or
a first index, wherein the first index is used to indicate multiple spatial domain beam quantities.

50. The apparatus of claim 48, wherein the frequency domain basis vector quantity comprises one or more of the following:

a single frequency domain basis vector quantity;
multiple frequency domain basis vector quantities; or
a second index, wherein the second index is used to indicate multiple frequency domain basis vector quantities.

51. The apparatus of any one of claims 46 to 50, wherein parsing the codebook parameter based on the initial codebook parameter configuration information comprises:

determining a bit width of each codebook parameter based on the initial codebook parameter configuration information; and
parsing the codebook parameters based on the bit width.

52. A computer-readable storage medium storing a computer program, wherein the computer program is used for causing a computer to perform the method for codebook parameter transmission of any one of claims 1 to 17.

Determining initial codebook parameter
configuration information — 101

Determining a codebook parameter in a multi-point
coherent joint transmission way based on the initial
codebook parameter configuration information — 102

Reporting the codebook parameter in the multi-
point coherent joint transmission way — 103

FIG. 1

Receiving codebook parameters reported from a
terminal — 201

Parsing the codebook parameters based on initial
codebook parameter configuration information — 202

FIG. 2

Processor — 310

Bus interface

Tranceiver — 300

Memory — 320

User
interface — 330

FIG. 3

410

Processor

420

Memory

Bus interface

400

Transceiver

FIG. 4

501

First
determining
module

502

Second
determining
module

503

First
transmitting
module

FIG. 5

601

Second
transmitting
module

602

Parsing module

FIG. 6

## INTERNATIONAL SEARCH REPORT

| International application No. |
| --- |
| **PCT/CN2023/109796** |

| A. | CLASSIFICATION OF SUBJECT MATTER |
| --- | --- |

H04B7/024(2017.01)i

According to International Patent Classification (IPC) or to both national classification and IPC

| B. | FIELDS SEARCHED |
| --- | --- |

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT; VEN; ENTXTC; ENTXT; VCN; CNKI; IEEE; 3GPP: 码本, 多, 联合, 相干, 协作, 协同, 波束, 频率, 频域, 基向量, 非零, 系数, 最强, 传输, 接收, 发送, CJT, C-JT, MTRP, multi transmitting receiving point, coherent joint transmission, CSI, codebook, frenquency, multi+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113810090 A (HUAWEI TECHNOLOGIES CO., LTD.) 17 December 2021 (2021-12-17) description, paragraphs [0099]-[0278] | 1, 2, 12, 13, 17-19, 29, 30, 34-36, 46, 47, 51, 52 |
| Y | CN 113810090 A (HUAWEI TECHNOLOGIES CO., LTD.) 17 December 2021 (2021-12-17) description, paragraphs [0099]-[0278] | 2-11, 13-17, 19-28, 30-34, 36-45, 47-52 |
| Y | CN 111726154 A (TELECOMMUNICATIONS TECHNOLOGY RESEARCH INSTITUTE CO., LTD.) 29 September 2020 (2020-09-29) description, paragraphs [0263]-[0327] | 2-5, 9-11, 13-17, 19-22, 26-28, 30-34, 36-39, 43-45, 47-52 |
| Y | CN 113992250 A (GUANGDONG OPPO MOBILE TELECOMMUNICATIONS CORP., LTD.) 28 January 2022 (2022-01-28) description, paragraphs [0043]-[0190] | 6-8, 14-17, 23-25, 31-34, 40-42, 48-52 |
| A | CN 112187324 A (DATANG MOBILE COMMUNICATIONS EQUIPMENT CO., LTD.) 05 January 2021 (2021-01-05) entire document | 1-52 |

| ✓ Further documents are listed in the continuation of Box C. | ✓ See patent family annex. |
| --- | --- |

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **25 October 2023** | **05 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/109796**

**C.    DOCUMENTS CONSIDERED TO BE RELEVANT**

| Category* | Citation of document, with indication, where appropriate, of the relevant passages | Relevant to claim No. |
|---|---|---|
| A | WO 2021213656 A1 (NOKIA TECHNOLOGIES OY) 28 October 2021 (2021-10-28) entire document | 1-52 |

Form PCT/ISA/210 (second sheet) (July 2022)

**INTERNATIONAL SEARCH REPORT**
Information on patent family members

| | | International application No. |
|---|---|---|
| | | **PCT/CN2023/109796** |

| Patent document cited in search report | | | Publication date (day/month/year) | Patent family member(s) | Publication date (day/month/year) |
|---|---|---|---|---|---|
| CN | 113810090 | A | 17 December 2021 | None | |
| CN | 111726154 | A | 29 September 2020 | None | |
| CN | 113992250 | A | 28 January 2022 | None | |
| CN | 112187324 | A | 05 January 2021 | None | |
| WO | 2021213656 | A1 | 28 October 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210969422